# EUROPEAN PATENT APPLICATION

(11) **EP 4 804 251 A1**
(43) Date of publication of application: **09.09.2026**
(21) Application number: 25709604.0
(22) Date of filing: 23.01.2025
(51) Int. Cl.: H01M 4/36

(54) **PHOSPHATE-BASED POSITIVE ELECTRODE MATERIAL AND PREPARATION METHOD THEREFOR, POSITIVE ELECTRODE SHEET, AND SECONDARY BATTERY**

(30) Priority: 21.01.2025 CN 202510096123
(71) Applicant: Hubei Wanrun New Energy Technology Co., Ltd., Shiyan, Hubei 442500 (CN)
(72) Inventor: SHI, Zhixiang, Shiyan, Hubei 442500 (CN); PENG, Tangping, Shiyan, Hubei 442500 (CN); LV, Fei, Shiyan, Hubei 442500 (CN); MA, Weijia, Shiyan, Hubei 442500 (CN); MA, Xiangrui, Shiyan, Hubei 442500 (CN)
(74) Representative: Manitz Finsterwald Patent- und Rechtsanwaltspartnerschaft mbB
(86) International application number: PCT/CN2025/074243
(87) International publication number: WO 2026/156583

(57) **Abstract**

The present application provides a phosphate cathode material, a preparation method thereof, a cathode plate, and a secondary battery, which belong to the field of battery material technology. The phosphate cathode material includes a core and a carbon layer coating the core. The core is represented by formula Na₃V_{2-x-y}AₓB_{y}(PO₄)₂F₃, where 0≤x≤0.5, 0≤y≤0.5, and x and y are not simultaneously zero. Element A and element B each independently include one or more of Fe, Mn, Ti, Al, and Mg, and element A and element B are different from each other. A compaction density of the phosphate cathode material is greater than or equal to 2.0 g/cm³, and a BET specific surface area of the phosphate cathode material is greater than or equal to 8 m²/g. The core of the phosphate cathode material is doped with high voltage plateau metal elements, and is coated with the carbon layer, which can effectively improve the electronic conductivity, compaction density and BET specific surface area of the phosphate cathode material, thereby achieving excellent performance in terms of capacity, rate performance, and cycling performance.

## Description

### TECHNICAL FIELD

The present application relates to the field of battery material technology, and specifically to a phosphate cathode material, a preparation method thereof, a cathode plate, and a secondary battery.

### BACKGROUND

Sodium-ion batteries (SIBs) are a type of secondary batteries that rely on the movement of sodium ions (Na⁺) between the cathodes and the anodes to achieve charge and discharge. Their working principle is similar to that of the mainstream secondary batteries, i.e., the lithium-ion batteries (LIBs). Due to the abundance of sodium ion resources in the Earth's crust and their low cost, SIBs have attracted significant attention and are considered the most likely alternative to LIBs in areas such as grid-scale energy storage and power batteries for new energy vehicles. Among the cathode materials for sodium-ion batteries, polyanionic compounds (PACs) exhibit excellent cycle life, making them highly promising in the field of SIBs.

Sodium super ionic conductors (NASICON) are one of the representative PAC materials, featuring a stable three-dimensional open framework that enables rapid Na⁺ migration. Phosphate materials, such as sodium vanadium phosphate (Na₃V₂(PO₄)₃, NVP) and sodium vanadium fluorophosphate (Na₃V₂(PO₄)₂F₃, NVPF), are typical NASICON materials and can serve as cathode materials for SIBs. However, traditional phosphate cathode materials suffer from drawbacks such as poor electronic conductivity, low compaction density, and small BET specific surface area, which limit their electrochemical performance.

### SUMMARY

In view of the technical issues existing in the background, the present application provides a phosphate cathode material, a preparation method thereof, a cathode plate, and a secondary battery, aiming to address the technical issues, such as poor electronic conductivity, low compaction density, and small BET specific surface area in traditional phosphate cathode materials, which limit their electrochemical performance.

In a first aspect, an embodiment of the present application provides a phosphate cathode material, including a core and a carbon layer coating the core;
the core is represented by formula Na_{3+x+y}V_{2-x-y}AₓB_{y}(PO₄)₂F₃;
where 0≤x≤0.5, 0≤y≤0.5, and x and y are not simultaneously zero;
element A and element B each independently include one or more of Fe, Mn, Ti, Al, and Mg, and element A and element B are different from each other;
a compaction density of the phosphate cathode material is greater than or equal to 2.0 g/cm³, and a BET specific surface area of the phosphate cathode material is greater than or equal to 8 m²/g.

In the technical solution of the embodiment of the present application, the core of the phosphate cathode material is a sodium vanadium fluorophosphate material doped with at least one of element A and element B. The elements A and B are selected from metal elements which are beneficial for elevating the voltage plateau, such as Fe, Mn, Ti, Al, and Mg, and thus is conducive to optimizing the electronic conductivity of the phosphate cathode material, thereby effectively elevating the average voltage plateau. Meanwhile, by controlling the compaction density and BET specific surface area of the phosphate cathode material and coating the core with a carbon layer, the electronic conductivity, structural stability, and energy density of the phosphate cathode material are further enhanced. As a result, the phosphate cathode material can have excellent performance in terms of capacity, rate performance, and cycling performance, thereby achieving a high-energy-density sodium-ion battery.

In some embodiments, a mass fraction of the carbon layer in the phosphate cathode material is in a range from 1.8% to 3%; and/or a thickness of the carbon layer is in a range from 0.8 nm to 1.8 nm.

In these embodiments, controlling the mass fraction and/or thickness of the carbon layer within the above range is beneficial for the carbon layer to have good coating effect on the core, which improves electronic conductivity, enhances structural stability, and suppresses side reactions, thereby improving the electrochemical performance of the phosphate cathode material, such as the specific capacity, rate performance, and cycling performance.

In some embodiments, an initial charge specific capacity of the phosphate cathode material at 0.1 C is greater than or equal to 120 mAh/g.

In some embodiments, an initial discharge specific capacity of the phosphate cathode material at 0.1 C is greater than or equal to 110 mAh/g.

In some embodiments, an initial Coulombic efficiency of the phosphate cathode material at 0.1 C is greater than or equal to 90%.

In these embodiments, the phosphate cathode material exhibits high charge specific capacity, discharge specific capacity, and initial Coulombic efficiency, ensuring that the cathode plate and the secondary battery have high specific capacities and excellent rate performance.

In a second aspect, an embodiment of the present application provides a method for preparing a phosphate cathode material, including following steps:
mixing a vanadium source, oxalic acid, a phosphorus source, a dopant, and a solvent, and reacting to obtain a mixed solution;
subjecting the mixed solution to a first drying treatment and a first sintering treatment to obtain a precursor;
mixing the precursor, a sodium source, a fluorine source, and a carbon source, and grinding to obtain a slurry;
subjecting the slurry to a second drying treatment and a second sintering treatment to obtain the phosphate cathode material;
wherein the dopant includes a first source and/or a second source, a first metal element in the first source and a second metal element in the second source each independently include one or more of Fe, Mn, Ti, Al, and Mg, and the first metal element and the second metal element are different from each other.

In the technical solution of the embodiment of the present application, by performing the two sintering treatments, the first metal element and/or the second metal element in the dopant can be more easily intercalated into the crystal structure of the sodium vanadium fluorophosphate material, improving the structural stability of the phosphate cathode material. Additionally, the first metal element and/or the second metal element is beneficial for more complete melting of the phosphate cathode material during high-temperature sintering, resulting in a denser and smoother surface morphology of the phosphate cathode material, thereby enhancing the compaction density, BET specific surface area, rate performance, and cycling performance of the phosphate cathode material. Meanwhile, the introduction of oxalic acid, which has reducing effect, during the preparation of the precursor is beneficial for reducing the vanadium element in the vanadium source. Moreover, oxalic acid leaves almost no residual carbon after sintering, which is beneficial for controlling the carbon content and surface morphology of the phosphate cathode material, thereby improving the compaction density and BET specific surface area of the phosphate cathode material. Therefore, the phosphate cathode material prepared in the embodiment of the present application not only exhibits significantly improvement in compaction density and BET specific surface area but also includes a carbon layer coated on the core of the phosphate cathode material, further enhancing the electronic conductivity, structural stability, and energy density of the phosphate cathode material. As a result, the phosphate cathode material can have excellent performance in terms of specific capacity, rate performance, and cycling performance, facilitating the preparation of high-energy-density sodium-ion batteries.

In some embodiments, the step of mixing the vanadium source, the oxalic acid, the phosphorus source, the dopant, and the solvent, and reacting to obtain the mixed solution includes:
mixing the vanadium source and the solvent, and holding at a first temperature for a first time period to obtain a first solution;
mixing the first solution, the dopant, and the oxalic acid, and holding at a second temperature for a second time period to obtain a second solution;
mixing the second solution and the phosphorus source, and holding at a third temperature for a third time period to obtain the mixed solution;
wherein the first temperature is in a range from 80 °C to 90 °C, and the first time period is in a range from 30 min to 90 min;
the second temperature is in a range from 90 °C to 95 °C, and the second time period is in a range from 30 min to 60 min;
the third temperature is in a range from 90 °C to 100 °C, and the third time period is in a range from 12 min to 36 min.

In these embodiments, the first solution containing the vanadium source is used as the reaction base liquid, and the dopant, oxalic acid, and phosphorus source are progressively added for the reaction, ensuring uniform mixing and sufficient reaction of the raw materials, facilitating the intercalating of the metal element of the dopant into the crystal structure of the precursor, thereby improving the purity and structural stability of the phosphate cathode material.

In some embodiments, when the dopant includes the first and second sources, the ratio of amount of substance of vanadium element in the vanadium source, the oxalic acid, phosphorus element in the phosphorus source, the first metal element in the first source, and the second metal element in the second source is (0.9 to 1.1):(2.5 to 3.5):1:(0 to 0.25):(0 to 0.25).

In these embodiments, by controlling the ratio of amount of substance of the elements in the raw materials, the materials can be thoroughly reacted, resulting in a high-purity precursor.

In some embodiments, the vanadium source includes one or more of vanadium pentoxide, vanadium trioxide, vanadium dioxide, ammonium metavanadate, sodium metavanadate, sodium orthovanadate, and vanadyl oxalate.

In some embodiments, the phosphorus source includes one or more of phosphoric acid, diammonium hydrogen phosphate, ammonium dihydrogen phosphate, ammonium phosphate, disodium hydrogen phosphate, sodium dihydrogen phosphate, and sodium phosphate.

In some embodiments, the first source includes one or more of oxides, hydroxides, and salts containing the first metal element.

In some embodiments, the second source includes one or more of oxides, hydroxides, and salts containing the second metal element.

In some embodiments, the ratio of amount of substance of phosphorus element in the precursor, sodium element in the sodium source, fluorine element in the fluorine source, and carbon element in the carbon source is 1:(1.3 to 1.5):(1.3 to 1.5):(0.48 to 0.9).

In these embodiments, by controlling the ratio of amount of substance of the elements in the raw materials, the raw materials can react thoroughly to form a high-purity sodium vanadium fluorophosphate material, and a carbon layer with an appropriate thickness and carbon content is coated on the surface of the material.

In some embodiments, the sodium source includes one or more of sodium fluoride, sodium hydroxide, sodium carbonate, sodium bicarbonate, sodium nitrate, sodium acetate, sodium oxalate, sodium acetate, sodium dihydrogen phosphate, disodium hydrogen phosphate, and sodium phosphate.

In some embodiments, the fluorine source includes one or more of sodium fluoride, ammonium fluoride, and hydrogen fluoride.

In some embodiments, the carbon source includes one or more of glucose, polyethylene glycol, sucrose, and ascorbic acid.

In these embodiments, selecting different carbon sources is beneficial for adjusting the compaction density, BET specific surface area, and electrochemical performance of the phosphate cathode material, thereby improving the overall performance of the phosphate cathode material.

In some embodiments, the first sintering treatment is performed at a sintering temperature in a range from 700 °C to 750 °C for a temperature holding period in a range from 1 hour to 3 hours.

In these embodiments, by performing the first sintering treatment at 700 °C to 750 °C for 1 hour to 3 hours, the crystallinity of the precursor can be improved, thus enhancing the purity of the phosphate cathode material and improving the electrochemical performance of the phosphate cathode material.

In some embodiments, the second sintering treatment is performed at a sintering temperature in a range from 550 °C to 750 °C for a temperature holding period in a range from 8 hours to 12 hours.

In these embodiments, by performing the second sintering treatment at 550 °C to 750 °C for 8 hours to 12 hours, the energy consumption can be effectively controlled while preventing the formation of excessive impurity phases during sintering, which is beneficial for improving the crystallinity and purity of the phosphate cathode material, thereby enhancing the electrochemical performance, such as charge and discharge specific capacities.

In a third aspect, an embodiment of the present application provides a cathode plate, including the phosphate cathode material provided in the first aspect of the present application, or the phosphate cathode material prepared by the method provided in the second aspect of the present application.

In this embodiment, the cathode plate includes the above-described phosphate cathode material, and thus possesses the advantages such as high charge and discharge specific capacities, excellent rate performance, and superior cycling performance.

In a fourth aspect, an embodiment of the present application provides a secondary battery, including the cathode plate provided in the third aspect of the present application.

In this embodiment, the secondary battery includes the above-described cathode plate, and thus possesses the advantages such as high charge and discharge specific capacities, excellent rate performance, and superior cycling performance.

The above description is merely a summary of the technical solutions of the present application. In order to clearly illustrate the technical solutions of the present application for implementation according to the contents of the specification, as well as to make the above and other objectives, features, and advantages of the present application more apparent and comprehensible, specific embodiments of the present application are described below.

### BRIEF DESCRIPTION OF THE DRAWINGS

In order to clearly illustrate the technical solutions of the present application, the drawings used in the present application will be briefly described below. Apparently, the drawings described below are merely for some embodiments of the present application. For those of ordinary skill in the art, other drawings can be obtained according to the disclosed drawings without any creative effort.
FIG. 1 shows a flowchart of a method for preparing a phosphate cathode material according to an embodiment of the present application.
FIG. 2 shows a morphology image of a phosphate cathode material provided in Example 1.
FIG. 3 shows a morphology image of a phosphate cathode material provided in Comparative Example 1.
FIG. 4 shows charge and discharge curves of the phosphate cathode material provided in Example 1.
FIG. 5 shows charge and discharge curves of the phosphate cathode material provided in Comparative Example 1.

### DETAILED DESCRIPTION

The embodiments of the technical solutions of the present application will be described more comprehensively below in conjunction with the accompanying drawings. The embodiments below are only for clearly illustrating the technical solutions of the present application, and thus are merely examples rather than limitations on the patent protection scope of the present application.

Unless otherwise defined, all technical and scientific terms used herein have the same meaning as commonly understood by those of ordinary skill in the art to which the present application pertains. The terms used in the specification of the present application herein are for the purpose of describing specific embodiments only and are not intended to limit the present application. The terms "include", "have", and any variations thereof in the specification, claims, and the above drawing description of the present application are intended to encompass non-exclusive inclusions.

The technical terms "first" and "second" mentioned in the description of the embodiments of the present application are merely used for distinguishing different objects, and cannot be construed as indicating or implying a relative importance, or implicitly specifying the number, specific order, or primary-secondary relationship of the indicated technical features. In the description of the embodiments of the present application, "a plurality of" means two or more, unless otherwise defined explicitly and specifically.

The term "embodiment" means that specific features, structures, or characteristics described with reference to the embodiment can be included in at least one embodiment of the present application. The term "embodiment" appeared in various places in the specification does not necessarily refer to the same embodiment or an independent or alternative embodiment that is mutually exclusive of other embodiments. It can be explicitly and implicitly understood by those skilled in the art that the embodiment described herein can be combined with other embodiments.

The term "and/or" in the description of the embodiments of the present application merely describes a relationship between associated objects, indicating that three types of relationships may exist. For example, A and/or B can indicate three situations: only A exists, both A and B exist, and only B exists. In addition, the character "/" herein generally represents that the former and latter associated objects are in an "or" relationship.

The term "multiple" in the description of the embodiments of the present application means two or more. Similarly, "multiple groups" means two or more groups, and "multiple pieces" means two or more pieces.

In the description for the embodiments of the present application, unless otherwise specified, the solvent in "solution" or "base liquid", or "water", refers to at least one of distilled water, deionized water, purified water, or ultrapure water.

### Terminology

Unless otherwise specified or in the case of contradictions, the terms or phrases used in the present application are defined as follows:

Particle Size: For spherical particles, the particle size refers to the diameter of the spherical particles. For non-spherical particles, such as those with an olivine morphology, the particle size typically refers to the equivalent particle size (commonly referred to as particle size), which can be determined using a scanning electron microscope (SEM) or a laser particle size analyzer. The equivalent particle size means that when a certain physical property of a particle is the same as or similar to that of a homogeneous spherical particle, the diameter of the spherical particle is used to represent the diameter of the actual particle. Unless otherwise specified or in the case of contradictions, the particle size in the present application refers to the equivalent particle size.

Particle Size Distribution Parameter: In a particle size distribution curve, a DN particle size refers to a corresponding particle size when the cumulative particle size distribution percentage reaches N%, meaning that the proportion of particles smaller than this particle size in all particles reaches N%, where N = 0 to 100. When N=100, the D100 particle size represents the corresponding particle size when the cumulative particle size distribution percentage reaches 100%. When N=50, the D50 particle size represents the corresponding particle size when the cumulative particle size distribution percentage reaches 50%, which is the median particle size or median diameter, indicating that 50% of the particles are smaller and 50% are larger than this particle size. For example, "D50 particle size = 1mm" means that 50% of the particles have a particle size smaller than 1 mm, and 50% of the particles have a particle size greater than 1 mm.

During the commercialization of the sodium-ion batteries (SIBs), the requirements of capacity and compaction density are getting higher, as high capacity and high compaction density indicate high energy density of the assembled batteries. Currently, the electrode materials for SIBs face significant challenges, such as insuperable structural instability, slow ion diffusion, low operating voltage, and low energy/power density. To address these issues, researchers are mainly focused on designing and developing novel electrode materials that exhibit high adaptability and reversibility during intercalation/deintercalation process of the large sodium ions. Transition metal oxides (TMOs) and polyanionic compounds (PACs), both with layered structures, are two of the most promising candidate materials for the cathode materials of SIBs. The theoretical capacities of PAC materials are slightly lower than those of TMO materials (such as NaMnO₂, P2-Na_{2/3}Fe_{1/2}Mn_{1/2}O₂, vanadium oxides, etc.), but PAC materials generally possess superior cycle life compared to TMO materials, making them suitable for applications requiring ultra-long cycle life, such as grid-scale energy storage. Therefore, once the overall electrochemical performance of PAC materials (including high-rate capability, specific capacity, and operating voltage) is improved, their application prospects in SIBs will be significantly broad.

Sodium super ionic conductors (NASICON) are one of the representative PAC materials, having a stable three-dimensional (3D) open framework composed of P-O tetrahedra and M-O octahedra (M represents transition metals), enabling rapid Na⁺ migration. Sodium vanadium phosphate (Na₃V₂(PO₄)₃, NVP) is the most typical NASICON material, with a theoretical capacity of 117.6 mAh/g and an operating voltage of 3.3V to 3.4V, providing a material-based energy density of about 394 Wh/kg, which is notably lower than the theoretical values of the phosphate cathode materials for LIBs. Therefore, the main challenge faced by the phosphate cathode materials for SIBs is to enhance energy density to narrow the gap between theoretical and actual energy densities. Compared with NVP, which is fluorine free, the NASICON materials doped with fluorine generally exhibit a higher operating voltage. For example, sodium vanadium fluorophosphate (Na₃V₂(PO₄)₂F₃, NVPF) can provide an average operating voltage of up to 3.95 V, with a theoretical capacity of 128 mAh/g and a corresponding theoretical energy density of about 507 Wh/kg. Thus, NVPF is a more attractive and promising high energy-density NASICON material that can be used in SIBs. However, as a member of the NASICON family, NVPF also suffers from drawbacks such as poor electronic conductivity, low compaction density, and small BET specific surface area, which limit its capacity and rate performance, hindering its ability to achieve comprehensive excellent electrochemical performance, including high energy density.

To address the technical issues of poor electronic conductivity, low compaction density, and small BET specific surface area in traditional phosphate cathode materials, which limit their electrochemical performance, the present application provides a phosphate cathode material, a preparation method thereof, a cathode plate, and a secondary battery, wherein the core of the phosphate cathode material is a sodium vanadium fluorophosphate material doped with metal elements, and a carbon layer is coated on the core, which effectively enhances the electronic conductivity, compaction density, and BET specific surface area of the phosphate cathode material, leading to superior capacity, rate performance, and cycling performance. Consequently, the capacity, rate performance, and cycling performance of the cathode plate and secondary battery are also improved.

In a first aspect, an embodiment of the present application provides a phosphate cathode material, including a core and a carbon layer coating the core;
the core is represented by formula Na_{3+x+y}V_{2-x-y}AₓB_{y}(PO₄)₂F₃;
where 0≤x≤0.5, 0≤y≤0.5, and x and y are not simultaneously zero;
element A and element B each independently include one or more of Fe, Mn, Ti, Al, and Mg, and element A and element B are different from each other;
a compaction density of the phosphate cathode material is greater than or equal to 2.0 g/cm³, and a BET specific surface area of the phosphate cathode material is greater than or equal to 8 m²/g.

In the technical solution of the embodiment of the present application, the core of the phosphate cathode material is a sodium vanadium fluorophosphate material doped with at least one of element A and element B. The elements A and B are selected from metal elements which are beneficial for increasing the voltage plateau, such as Fe, Mn, Ti, Al, and Mg, and thus is conducive to optimizing the electronic conductivity of the phosphate cathode material, thereby effectively elevating the average voltage plateau. Meanwhile, by controlling the compaction density and BET specific surface area of the phosphate cathode material and coating the core with a carbon layer, the electronic conductivity, structural stability, and energy density of the phosphate cathode material are further enhanced. As a result, the phosphate cathode material can have excellent performance in terms of capacity, rate performance, and cycling performance, thereby achieving a high-energy-density sodium-ion battery.

For example, the compaction density of the phosphate cathode material is greater than or equal to 2.0 g/cm³, including but not limited to values such as 2.0 g/cm³, 2.02 g/cm³, 2.04 g/cm³, 2.06 g/cm³, 2.08 g/cm³, 2.1 g/cm³, 2.12 g/cm³, 2.14 g/cm³, 2.16 g/cm³, 2.18 g/cm³, or 2.2 g/cm³. Furthermore, the compaction density of the phosphate cathode material is preferably in a range from 2.03 g/cm³ to 2.13 g/cm³. A higher compaction density of the phosphate cathode material is beneficial for improving the specific capacity and rate performance, as well as reducing the amount of the phosphate cathode material, thus lowering the preparation cost of sodium-ion batteries.

For example, the BET specific surface area of the phosphate cathode material is greater than or equal to 8 m²/g, including but not limited to values such as 8 m²/g, 8.5 m²/g, 9 m²/g, 9.5 m²/g, 9.8 m²/g, 10 m²/g, 12 m²/g, 14 m²/g, 16 m²/g, 18 m²/g, or 20 m²/g. Furthermore, the BET specific surface area of the phosphate cathode material is preferably in a range from 10 m²/g to 15.5 m²/g. A moderate BET specific surface area is beneficial for providing more active sites for electrochemical reactions, improving the sodium-ion transporting rate, and contributing to higher specific capacity and better rate performance in sodium-ion batteries.

It can be understood that the values of x and y each independently include but are not limited to 0, 0.01, 0.05, 0.08, 0.1, 0.15, 0.2, 0.25, 0.3, 0.35, 0.4, 0.45, or 0.5, and x and y are not simultaneously zero. When x=0 or y=0, the core of the phosphate cathode material is doped with at least one cationic metal. When 0<x≤0.5 and 0≤y≤0.5, the core of the phosphate cathode material is doped with at least two different cationic metals, forming a high-entropy doped sodium vanadium fluorophosphate material.

It can be understood that based on the ranges of x and y, (2-x-y):x:y=(1 to 2):(0 to 0.5):(0 to 0.5), non-limiting examples of which include but are not limited to 1:0.5:0.5, 1.1:0.5:0.4, 1.1:0.4:0.5, 1.2:0.4:0.4, 1.3:0.4:0.3, 1.3:0.3:0.4, 1.4:0.3:0.3, 1.5:0.3:0.2, 1.5:0.2:0.3, 1.6:0.2:0.2, 1.7:0.2:0.1, 1.7:0.1:0.2, 1.8:0.1:0.1, 1.9:0.05:0.05, 1.9:0.1:0, or 1.9:0:1.

It can be understood that element A and element B each independently include one or more of Fe, Mn, Ti, Al, and Mg, and element A and element B are different from each other. The combinations of element A and element B include but are not limited to Fe and Mn; Fe and Ti; Fe and Al; Fe and Mg; Mn and Ti; Mn and Al; Mn and Mg; Ti and Al; Ti and Mg; Al and Mg; Fe, Mn, and Ti; Fe, Mn, and Al; Fe, Mn, and Mg; Fe, Ti, and Al; Fe, Ti, and Mg; Fe, Al, and Mg; Fe, Mn, Ti, and Al; Fe, Mn, Ti, and Mg; Fe, Mn, Ti, Al, and Mg, etc. When element A is at least two metal elements, the core can be represented by formula Na₃V_{2-x-y}Alₓ₁A2ₓ₂A3ₓ₃...AnₓₙB_{y}(PO₄)₂F₃, where A1, A2, A3,...An are different metal elements, and 0≤x1+x2+x3+...+xn≤0.5. When element B is at least two metal elements, the core can be represented by formula Na₃V_{2-x-y}AₓB1_{y1}B2_{y2}B3_{y3}...Bm_{yn}(PO₄)₂F₃, where B1, B2, B3,...Bm are different metal elements, and 0≤y1+y2+y3+...+ym≤0.5. When element A and element B are each independently two metal elements, the core can be represented by formula Na₃V_{2-x-y}A1ₓ₁A2ₓ₂B1_{y1}B2_{y2}(PO₄)₂F₃, where A1, A2, B1, and B2 are different metal elements, and 0≤x1+x2≤0.5, 0≤y1+y2≤0.5.

In the technical solution of the present application, the ionic radii of metals such as Fe, Mn, Ti, Al, and Mg are similar to the radius of V³⁺ (0.062 nm), which is beneficial for expanding the diffusion channels for Na⁺, enhancing the ionic conductivity of the phosphate cathode material and inhibiting its structural phase transformation during charge and discharge processes, thereby reducing the voltage decay caused by the phase transformation. Compared to NVPF, which is not doped with cationic metal, doping the sodium vanadium fluorophosphate material with high voltage plateau cationic metals such as Fe, Mn, Ti, Al, and Mg effectively increases the average voltage plateau and specific capacity of the phosphate cathode material. The co-doping of specific types and ratios of cationic metals further promotes more complete melting of the phosphate cathode material during high-temperature sintering, resulting in a denser and smoother surface morphology, which enhances the compaction density, BET specific surface area, and specific capacity of the sodium vanadium fluorophosphate material.

In some embodiments, element A is Fe, and element B is Ti.

In these embodiments, the compaction density and BET specific surface area of the phosphate cathode material are further improved, which improves the specific capacity, rate performance, and cycling performance of the phosphate cathode material.

In some embodiments, 0.05≤x≤0.3 and 0.05≤y≤0.3. It can be understood that based on the values of x and y, (2-x-y):x:y=(1.4 to 1.9):(0.05 to 0.3):(0.05 to 0.3).

In these embodiments, controlling the doping ratio of element A to element B within the above range is beneficial for obtaining a phosphate cathode material with a high compaction density, a low powder resistivity, and a high average voltage plateau.

In some embodiments, 0.05≤x≤0.25, 0.05≤y≤0.25. It can be understood that based on the values of x and y, (2-x-y):x:y=(1.5 to 1.9):(0.05 to 0.25):(0.05 to 0.25).

In these embodiments, controlling the doping ratio of element A to element B within the above range is beneficial for obtaining a phosphate cathode material with a higher compaction density, a lower powder resistivity, and a higher average voltage plateau.

In some embodiments, 0.1≤x≤0.2, 0.1≤y≤0.2. It can be understood that based on the values of x and y, (2-x-y):x:y = (1.6 to 1.8):(0.1 to 0.2):(0.1 to 0.2).

In these embodiments, controlling the doping ratio of element A to element B within the above range is more beneficial for obtaining a phosphate cathode material with a higher compaction density, a lower powder resistivity, and a higher average voltage plateau, thereby further enhancing the electrochemical performance of the phosphate cathode material, such as the charge specific capacity, discharge specific capacity, initial Coulombic efficiency, and rate performance.

In some embodiments, the core of the phosphate cathode material is represented by any one of the following formulas:
Na₃V_{1.8}Fe_{0.1}Ti_{0.1}(PO₄)₂F₃; Na₃V_{1.7}Fe_{0.2}Ti_{0.1}(PO₄)₂F₃; Na₃V_{1.6}Fe_{0.2}Ti_{0.2}(PO₄)₂F₃; Na₃V_{1.9}Fe_{0.05}Ti_{0.05}(PO₄)₂F₃; Na₃V_{1.4}Fe_{0.3}Ti_{0.3}(PO₄)₂F₃; Na₃V_{1.8}Fe_{0.1}Mn_{0.1}(PO₄)₂F₃; Na₃V_{1.8}Mn_{0.1}Al_{0.1}(PO₄)₂F₃; Na₃V_{1.8}Ti_{0.1}Mg_{0.1}(PO₄)₂F₃; Na₃V_{1.9}Fe_{0.1}(PO₄)₂F₃; Na₃V_{1.9}Ti_{0.1}(PO₄)₂F₃; Na₃V_{1.6}(FeAlMnTi)_{0.1}(PO₄)₂F₃; Na₃V_{1.65}Fe_{0.1}Ti_{0.25}(PO₄)₂F₃; Na₃V_{1.65}Fe_{0.25}Ti_{0.1}(PO₄)₂F₃; Na_{2.95}V_{1.8}Fe_{0.1}Ti_{0.1}(PO₄)₂F_{2.95}; Na_{3.05}V_{1.8}Fe_{0.1}Ti_{0.1}(PO₄)₂F_{3.05}; Na_{2.9}V_{1.8}Fe_{0.1}Ti_{0.1}(PO₄)₂F_{2.9}; Na_{3.1}V_{1.8}Fe_{0.1}Ti_{0.1}(PO₄)₂F_{3.1}.

In some embodiments, a mass fraction of the carbon layer in the phosphate cathode material is in a range from 1.8% to 3%.

In some embodiments, a thickness of the carbon layer is in a range from 0.8 nm to 1.8 nm.

In these embodiments, controlling the mass fraction and/or thickness of the carbon layer within the above range is beneficial for the carbon layer to have good coating effect on the core, which improves electronic conductivity, enhances structural stability, and suppresses side reactions, thereby improving the electrochemical performance of the phosphate cathode material, such as the specific capacity, rate performance, and cycling performance.

For example, the mass fraction of the carbon layer in the phosphate cathode material can include, but is not limited to, 1.8%, 1.9%, 2%, 2.1%, 2.2%, 2.3%, 2.4%, 2.5%, 2.6%, 2.7%, 2.8%, 2.9%, or 3%. Further, the mass fraction of the carbon layer in the phosphate cathode material is preferably in a range from 2.2% to 2.74%. In this range of mass fraction, the carbon layer can have better coating effect on the core, which further improves the electrochemical performance of the phosphate cathode material, such as the specific capacity, rate performance, and cycling performance.

For example, the thickness of the carbon layer can include, but is not limited to, 0.8 nm, 0.9 nm, 1 nm, 1.1 nm, 1.2 nm, 1.3 nm, 1.4 nm, 1.5 nm, 1.6 nm, 1.7 nm, or 1.8 nm. Further, the mass ratio of the core and the carbon layer is preferably in a range from 0.8 nm to 1.5 nm. The carbon layer in the above range is further beneficial for improving the electronic conductivity, allowing the phosphate cathode material to exhibit superior electrochemical performance.

In some embodiments, the D50 particle size of the phosphate cathode material is in a range from 6 µm to 10 µm, including but not limited to 6 µm, 6.5 µm, 7 µm, 7.5 µm, 8 µm, 8.5 µm, 9 µm, 9.5 µm, or 10 µm.

In these embodiments, the phosphate cathode material has an appropriate D50 particle size, ensuring that Na⁺ can be intercalated and deintercalated relatively quickly, thereby improving the specific capacity and rate performance of the phosphate cathode material, and that the phosphate cathode material can easily disperse in the electrode slurry, thereby promoting the formation of a flat and uniform cathode active coating, which improves the flatness and stability of the cathode plate including the phosphate cathode material.

In some embodiments, the powder resistivity of the phosphate cathode material is in a range from 100 Ω·cm to 300 Ω·cm, including but not limited to 100 Ω·cm, 120 Ω·cm, 140 Ω·cm, 160 Ω·cm, 180 Ω·cm, 200 Ω·cm, or 300 Ω·cm, and preferably in a range from 100 Ω·cm to 200 Ω·cm.

In some embodiments, an average voltage plateau of the phosphate cathode material is in a range from 3.6 V to 3.7 V, including but not limited to 3.6 V, 3.61 V, 3.62 V, 3.63 V, 3.64 V, 3.65 V, 3.67 V, 3.68 V, 3.69 V, or 3.7 V, and preferably in a range from 3.65 V to 3.7 V.

In some embodiments, an initial charge specific capacity of the phosphate cathode material at 0.1 C is greater than or equal to 120 mAh/g, including but not limited to 120 mAh/g, 121 mAh/g, 122 mAh/g, 123 mAh/g, 124 mAh/g, 125 mAh/g, 126 mAh/g, 127 mAh/g, 128 mAh/g, 129 mAh/g, or 130 mAh/g, and preferably in a range from 122 mAh/g to 127 mAh/g.

In some embodiments, an initial discharge specific capacity of the phosphate cathode material at 0.1 C is greater than or equal to 110 mAh/g, including but not limited to 110 mAh/g, 111 mAh/g, 112 mAh/g, 113 mAh/g, 114 mAh/g, 115 mAh/g, 116 mAh/g, 117 mAh/g, 118 mAh/g, 119 mAh/g, or 120 mAh/g, and preferably in a range from 111 mAh/g to 116 mAh/g.

In some embodiments, an initial Coulombic efficiency of the phosphate cathode material at 0.1 C is greater than or equal to 90%, including but not limited to 90%, 91%, 92%, 93%, 94%, 95%, 96%, 97%, 98%, 99%, or 100%, and preferably in a range from 90.1% to 93%.

In some embodiments, an initial discharge specific capacity of the phosphate cathode material at 1 C is greater than or equal to 107 mAh/g, including but not limited to 107 mAh/g, 108 mAh/g, 109 mAh/g, 110 mAh/g, 111 mAh/g, 112 mAh/g, 113 mAh/g, 114 mAh/g, 115 mAh/g, 116 mAh/g, 117 mAh/g, 118 mAh/g, 119 mAh/g, or 120 mAh/g, and preferably in a range from 107 mAh/g to 114 mAh/g.

In some embodiments, an initial discharge specific capacity of the phosphate cathode material at 5 C is greater than or equal to 102 mAh/g, including but not limited to 102 mAh/g, 103 mAh/g, 104 mAh/g, 105 mAh/g, 106 mAh/g, 107 mAh/g, 108 mAh/g, 109 mAh/g, 110 mAh/g, 111 mAh/g, 112 mAh/g, 113 mAh/g, 114 mAh/g, or 115 mAh/g, and preferably in a range from 102 mAh/g to 110 mAh/g.

In some embodiments, an 1C/0.1C rate performance of the phosphate cathode material is greater than or equal to 94%, including but not limited to 94%, 95%, 96%, 97%, 98%, 99%, or 100%, and preferably in a range from 94.46% to 98.5%.

In some embodiments, a capacity retention of the phosphate cathode material cycling at 1 C rate, room temperature, for 1000 cycles is greater than or equal to 70%, including but not limited to 70%, 72%, 75%, 78%, 80%, 82%, 85%, 88%, or 90%, and preferably in a range from 70% to 80%.

In these embodiments, the phosphate cathode material exhibits relatively high initial charge and discharge specific capacities, initial Coulombic efficiency, rate performance, and cycling performance, ensuring that the cathode plate and the secondary battery possess the advantages such as high specific capacity, excellent rate performance, and superior cycling performance.

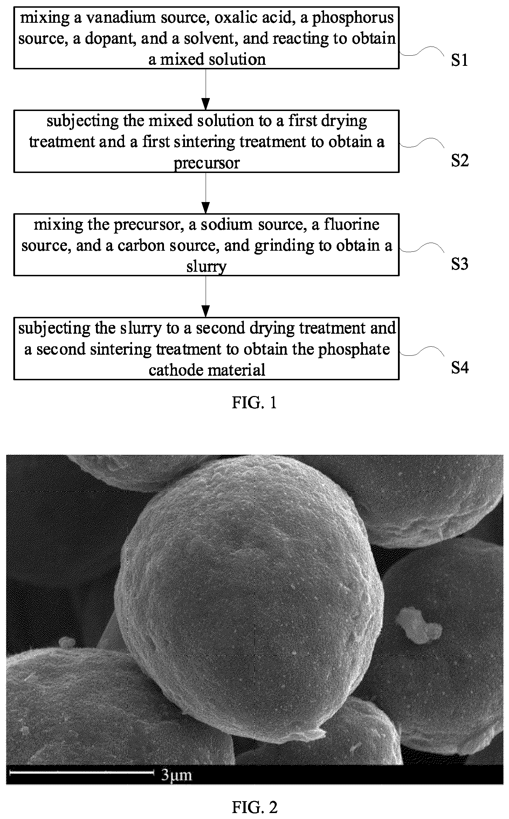

Referring to FIG. 1, in a second aspect, an embodiment of the present application provides a method for preparing a phosphate cathode material, including following steps:
S1, mixing a vanadium source, oxalic acid, a phosphorus source, a dopant, and a solvent, and reacting to obtain a mixed solution;
S2, subjecting the mixed solution to a first drying treatment and a first sintering treatment to obtain a precursor;
S3, mixing the precursor, a sodium source, a fluorine source, and a carbon source, and grinding to obtain a slurry;
S4, subjecting the slurry to a second drying treatment and a second sintering treatment to obtain the phosphate cathode material;
wherein the dopant includes a first source and/or a second source, a first metal element in the first source and a second metal element in the second source each independently include one or more of Fe, Mn, Ti, Al, and Mg, and the first metal element and the second metal element are different from each other.

In the technical solution of the embodiment of the present application, by performing the two sintering treatments, the first metal element and/or the second metal element in the dopant can be more easily intercalated into the crystal structure of the sodium vanadium fluorophosphate material, improving the structural stability of the phosphate cathode material. Additionally, the first metal element and/or the second metal element is beneficial for more complete melting of the phosphate cathode material during high-temperature sintering, resulting in a denser and smoother surface morphology of the phosphate cathode material, thereby enhancing the compaction density, BET specific surface area, rate performance, and cycling performance of the phosphate cathode material. Meanwhile, the introduction of oxalic acid, which has reducing effect, during the preparation of the precursor is beneficial for reducing the vanadium element in the vanadium source. Moreover, oxalic acid leaves almost no residual carbon after sintering, which is beneficial for better controlling the carbon content and surface morphology of the phosphate cathode material, thereby improving the compaction density and BET specific surface area of the phosphate cathode material. Therefore, the phosphate cathode material prepared in the embodiment of the present application not only exhibits significantly improvement in compaction density and BET specific surface area but also includes a carbon layer coated on the core of the phosphate cathode material, further enhancing the electronic conductivity, structural stability, and energy density of the phosphate cathode material. As a result, the phosphate cathode material can have excellent performance in terms of specific capacity, rate performance, and cycling performance, facilitating the preparation of high-energy-density sodium-ion batteries.

In some embodiments, the method for preparing the phosphate cathode material provided by the embodiment of the present application can be used to prepare the above-described phosphate cathode material.

The following will specifically describe the respective steps of the method for preparing the phosphate cathode material.

In S1, the vanadium source, the oxalic acid, the phosphorus source, the dopant, and the solvent are mixed and reacted to obtain the mixed solution.

In some embodiments, the step S1 of mixing the vanadium source, the oxalic acid, the phosphorus source, the dopant, and the solvent, and reacting to obtain the mixed solution includes:
mixing the vanadium source and the solvent, and holding at a first temperature for a first time period to obtain a first solution;
mixing the first solution, the dopant, and the oxalic acid, and holding at a second temperature for a second time period to obtain a second solution;
mixing the second solution and the phosphorus source, and holding at a third temperature for a third time period to obtain the mixed solution;
wherein the first temperature is in a range from 80 °C to 90 °C, and the first time period is in a range from 30 min to 90 min;
the second temperature is in a range from 90 °C to 95 °C, and the second time period is in a range from 30 min to 60 min;
the third temperature is in a range from 90 °C to 100 °C, and the third time period is in a range from 12 min to 36 min.

In these embodiments, the first solution containing the vanadium source is used as the reaction base liquid, and the dopant, oxalic acid, and phosphorus source are progressively added for the reaction, ensuring uniform mixing and sufficient reaction of the raw materials, facilitating the intercalating of the metal element of the dopant into the crystal structure of the precursor, thereby improving the purity and structural stability of the phosphate cathode material.

For example, the first temperature can be but is not limited to 80 °C, 81 °C, 82 °C, 83 °C, 84 °C, 85 °C, 86 °C, 87 °C, 88 °C, 89 °C, or 90 °C; the first time period can be but is not limited to 30 min, 40 min, 50 min, 60 min, 70 min, 80 min, or 90 min; the second temperature can be but is not limited to 90 °C, 91 °C, 92 °C, 93 °C, 94 °C, or 95 °C; the second time period can be but is not limited to 30 min, 35 min, 40 min, 45 min, 50 min, 55 min, or 60 min; the third temperature can be but is not limited to 90 °C, 91 °C, 92 °C, 93 °C, 94 °C, 95 °C, 96 °C, 97 °C, 98 °C, 99 °C, or 100 °C; the third time period can be but is not limited to 12 min, 16 min, 20 min, 24 min, 28 min, 32 min, or 36 min.

In some embodiments, when the dopant includes the first source and the second source, the ratio of amount of substance of the vanadium element in the vanadium source, the oxalic acid, the phosphorus element in the phosphorus source, the first metal element in the first source, and the second metal element in the second source is (0.9 to 1.1):(2.5 to 3.5):1:(0 to 0.5):(0 to 0.5), and neither the molar amount of the first metal element in the first source nor the molar amount of the second metal element in the second source is zero. It can be understood that in other embodiments, when the dopant includes the first source or the second source, the ratio of amount of substance of the vanadium element in the vanadium source, the oxalic acid, the phosphorus element in the phosphorus source, and the first metal element in the first source (or the second metal element in the second source) is (0.9 to 1.1):(2.5 to 3.5):1:(0 to 0.5), and the molar amount of the first metal element in the first source (and/or the second metal element in the second source) is not zero.

In these embodiments, by controlling the ratio of amount of substance of the elements in the raw materials, the materials can be thoroughly reacted, resulting in a high-purity precursor.

For example, the ratio of amount of substance of the vanadium element in the vanadium source to the phosphorus element in the phosphorus source can be but is not limited to 0.9:1, 0.92:1, 0.94:1, 0.96:1, 0.98:1, 1:1, 1.02:1, 1.04:1, 1.06:1, 1.08:1, or 1.1:1; the ratio of amount of substance of the oxalic acid to the phosphorus element in the phosphorus source can be but is not limited to 2.5:1, 2.6:1, 2.7:1, 2.8:1, 2.9:1, 3:1, 3.1:1, 3.2:1, 3.3:1, 3.4:1, or 3.5:1; the ratio of amount of substance of the phosphorus element in the phosphorus source to the first metal element in the first source can be but is not limited to 1:0, 1:0.05, 1:0.1, 1:0.15, 1:0.2, 1:0.25, 1:0.3, 1:0.35, 1:0.4, 1:0.45, or 1:0.5; the ratio of amount of substance of the phosphorus element in the phosphorus source to the second metal element in the second source can be but is not limited to 1:0, 1:0.05, 1:0.1, 1:0.15, 1:0.2, 1:0.25, 1:0.3, 1:0.35, 1:0.4, 1:0.45, or 1:0.5.

In some embodiments, the ratio of amount of substance of the phosphorus element in the phosphorus source, the first metal element in the first source, and the second metal element in the second source is 1:(0.05 to 0.3):(0.05 to 0.3).

In these embodiments, controlling the amounts of the first source and the second source within the above range is beneficial for obtaining a phosphate cathode material with high compaction density, low powder resistivity, and an elevated average voltage plateau.

In some embodiments, the ratio of amount of substance of the phosphorus element in the phosphorus source, the first metal element in the first source, and the second metal element in the second source is 1:(0.05 to 0.25):(0.05 to 0.25).

In these embodiments, controlling the amounts of the first source and the second source within the above range is beneficial for obtaining a phosphate cathode material with high compaction density, low powder resistivity, and an elevated average voltage plateau.

In some embodiments, the ratio of amount of substance of the phosphorus element in the phosphorus source, the first metal element in the first source, and the second metal element in the second source is 1:(0.1 to 0.2):(0.1 to 0.2).

In these embodiments, controlling the amounts of the first source and the second source within the above range is beneficial for obtaining a phosphate cathode material with high compaction density, low powder resistivity, and an elevated average voltage plateau, thereby further improving the electrochemical performance of the phosphate cathode material.

In some embodiments, the vanadium source includes one or more of vanadium pentoxide, vanadium trioxide, vanadium dioxide, ammonium metavanadate, sodium metavanadate, sodium orthovanadate, and vanadyl oxalate.

It can be understood that the vanadium source can be any one selected from the above substances or a combination of at least two of the above substances, such as: a combination of vanadium pentoxide and vanadium trioxide, a combination of vanadium pentoxide and vanadium dioxide, a combination of vanadium pentoxide and ammonium metavanadate, a combination of vanadium pentoxide and sodium metavanadate, a combination of vanadium pentoxide and sodium orthovanadate, a combination of vanadium pentoxide and vanadyl oxalate, a combination of vanadium pentoxide, vanadium trioxide, vanadium dioxide, and ammonium metavanadate, etc. Furthermore, the vanadium source can be preferably vanadium pentoxide.

In some embodiments, the phosphorus source includes one or more of phosphoric acid, diammonium hydrogen phosphate, ammonium dihydrogen phosphate, ammonium phosphate, disodium hydrogen phosphate, sodium dihydrogen phosphate, and sodium phosphate.

It can be understood that the phosphorus source can be any one selected from the above substances or a combination of at least two of the above substances, such as: a combination of phosphoric acid and diammonium hydrogen phosphate, a combination of phosphoric acid and ammonium dihydrogen phosphate, a combination of phosphoric acid and ammonium phosphate, a combination of phosphoric acid and disodium hydrogen phosphate, a combination of phosphoric acid and sodium dihydrogen phosphate, a combination of phosphoric acid and sodium phosphate, a combination of diammonium hydrogen phosphate and ammonium dihydrogen phosphate, a combination of diammonium hydrogen phosphate and ammonium phosphate, a combination of diammonium hydrogen phosphate and disodium hydrogen phosphate, a combination of diammonium hydrogen phosphate and sodium dihydrogen phosphate, a combination of diammonium hydrogen phosphate and sodium phosphate, a combination of diammonium hydrogen phosphate, ammonium dihydrogen phosphate, and ammonium phosphate, etc. Furthermore, the phosphorus source can be preferably ammonium dihydrogen phosphate.

In some embodiments, the first source includes one or more of oxides, hydroxides, and salts containing the first metal element; the second source includes one or more of oxides, hydroxides, and salts containing the second metal element. The salts include one or more of carbonates, sulfates, nitrates, chlorides, acetates, oxalates, and ethanol salts. Furthermore, the first source includes one or more oxides and carbonates containing the first metal element, and the second source includes one or more oxides and carbonates containing the second metal element. Adopting an oxide and/or a carbonate as the dopant is advantageous for avoiding the introduction of an anionic impurity, thereby ensuring that the phosphate cathode material has higher purity.

In some embodiments, the first source and the second source each independently include one or more of ferric oxide, ferroferric oxide, manganese dioxide, trimanganese tetraoxide, manganese carbonate, titanium dioxide, aluminum oxide, magnesium oxide, and magnesium carbonate, and the first metal element in the first source and the second metal element in the second source are different from each other.

For example, combinations of the first and second sources include, but are not limited to: a combination of ferric oxide and manganese dioxide, a combination of ferric oxide and trimanganese tetraoxide, a combination of ferric oxide and manganese carbonate, a combination of ferric oxide and titanium dioxide, a combination of ferric oxide and aluminum oxide, a combination of ferric oxide and magnesium oxide, a combination of ferric oxide and magnesium carbonate, a combination of ferroferric oxide and manganese dioxide, a combination of ferroferric oxide and trimanganese tetraoxide, a combination of ferroferric oxide and manganese carbonate, a combination of ferroferric oxide and titanium dioxide, a combination of ferroferric oxide and aluminum oxide, a combination of ferroferric oxide and magnesium oxide, a combination of ferroferric oxide and magnesium carbonate, a combination of manganese dioxide and titanium dioxide, a combination of manganese dioxide and aluminum oxide, a combination of manganese dioxide and magnesium oxide, a combination of manganese dioxide and magnesium carbonate, a combination of titanium dioxide and aluminum oxide, a combination of titanium dioxide and magnesium oxide, and a combination of aluminum oxide and magnesium oxide, etc.

In some embodiments, the solvent can be selected from one or more of distilled water, deionized water, purified water, and ultrapure water, and optionally can be deionized water.

In S2, the mixed solution is subjected to the first drying treatment and the first sintering treatment to obtain the precursor.

In some embodiments, the step of subjecting the mixed solution to the first drying treatment includes a step of subjecting the mixed solution to a first spray drying treatment to obtain a first dried material.

In some embodiments, the first sintering treatment is performed at a sintering temperature in a range from 700 °C to 750 °C for a temperature holding period in a range from 1 hour to 3 hours.

In these embodiments, by performing the first sintering treatment at 700 °C to 750 °C for 1 hour to 3 hours, the crystallinity of the precursor can be improved, thus enhancing the purity of the phosphate cathode material and improving the electrochemical performance of the phosphate cathode material.

For example, the sintering temperature of the first sintering treatment can be but not limited to 700 °C, 705 °C, 710 °C, 715 °C, 720 °C, 725 °C, 730 °C, 735 °C, 740 °C, 745 °C, or 750 °C, and further preferably 750 °C; the temperature holding period can be but is not limited to 1 hour, 1.5 hours, 2 hours, 2.5 hours, or 3 hours, and further preferably 1.5 hours.

In some embodiments, the first sintering treatment is performed in a protective atmosphere, and the protective gas in the protective atmosphere includes at least one of nitrogen gas, helium gas, neon gas, argon gas, and xenon gas, and further preferably nitrogen gas or argon gas. In the protective atmosphere, the precursor can be prevented from reacting with moisture or oxygen during the heating, holding, and cooling stages of the high-temperature sintering, thereby improving the purity of the precursor.

In some embodiments, the precursor includes a vanadium phosphate material, represented by formula V_{1-x-y}AₓB_{y}PO₄, where the meanings and ranges of A, B, x, and y are as previously described.

In S3, the precursor, the sodium source, the fluorine source, and the carbon source are mixed and grind to obtain the slurry.

In some embodiments, the ratio of amount of substance of the phosphorus element in the precursor, the sodium element in the sodium source, the fluorine element in the fluorine source, and the carbon source is 1:(1.3 to 1.5):(1.3 to 1.5):(0.08 to 0.15).

In some embodiments, the ratio of amount of substance of the phosphorus element in the precursor, the sodium element in the sodium source, the fluorine element in the fluorine source, and the carbon element in the carbon source is 1:(1.3 to 1.5):(1.3 to 1.5):(0.48 to 0.9).

In these embodiments, by controlling the ratio of amount of substance of the elements in the raw materials, the raw materials can react thoroughly to form a high-purity sodium vanadium fluorophosphate material, and a carbon layer with an appropriate thickness and carbon content is coated on the surface of the material.

For example, the ratio of amount of substance of the phosphorus element in the precursor to the sodium element in the sodium source can be, but is not limited to 1:1.3, 1:1.32, 1:1.34, 1:1.36, 1:1.38, 1:1.4, 1:1.42, 1:1.44, 1:1.46, 1:1.48, or 1:1.5; the ratio of amount of substance of the phosphorus element in the precursor to the fluorine element in the fluorine source can be, but is not limited to 1:1.3, 1:1.32, 1:1.34, 1:1.36, 1:1.38, 1:1.4, 1:1.42, 1:1.44, 1:1.46, 1:1.48, or 1:1.5; the ratio of amount of substance of the phosphorus element in the precursor to the carbon element in the carbon source can be, but is not limited to 1:0.48, 1:0.54, 1:0.6, 1:0.66, 1:0.72, 1:0.78, 1:0.84, or 1:0.9.

In some embodiments, the sodium source includes one or more of sodium fluoride, sodium hydroxide, sodium carbonate, sodium bicarbonate, sodium nitrate, sodium acetate, sodium oxalate, sodium acetate, sodium dihydrogen phosphate, disodium hydrogen phosphate, and sodium phosphate.

It can be understood that the sodium source can be any one selected from the above substances or a combination of at least two of the above substances, such as: a combination of sodium fluoride and sodium hydroxide, a combination of sodium fluoride and sodium carbonate, a combination of sodium fluoride and sodium bicarbonate, a combination of sodium fluoride and sodium nitrate, a combination of sodium fluoride and sodium acetate, a combination of sodium fluoride and sodium oxalate, a combination of sodium fluoride and sodium acetate, a combination of sodium fluoride and sodium dihydrogen phosphate, a combination of sodium fluoride and disodium hydrogen phosphate, a combination of sodium fluoride and sodium phosphate, a combination of sodium fluoride, sodium dihydrogen phosphate, disodium hydrogen phosphate, and sodium phosphate, etc. Further, the sodium source can be preferably sodium fluoride.

In some embodiments, the fluorine source includes one or more of sodium fluoride, ammonium fluoride, and hydrogen fluoride.

It can be understood that the fluorine source can be any one selected from the above substances or a combination of at least two of the above substances, such as: a combination of sodium fluoride and ammonium fluoride, a combination of sodium fluoride and hydrogen fluoride, or a combination of sodium fluoride, ammonium fluoride, and hydrogen fluoride. Furthermore, the fluorine source can be preferably sodium fluoride.

In some embodiments, the carbon source includes one or more of glucose, polyethylene glycol, sucrose, and ascorbic acid.

In these embodiments, selecting different carbon sources is beneficial for adjusting the compaction density, BET specific surface area, and electrochemical performance of the phosphate cathode material, thereby improving the overall performance of the phosphate cathode material.

It can be understood that the carbon source can be any one selected from the above substances or a combination of at least two of the above substances, such as: a combination of glucose and polyethylene glycol, a combination of glucose and sucrose, a combination of glucose and ascorbic acid, a combination of polyethylene glycol and sucrose, a combination of polyethylene glycol and ascorbic acid, a combination of sucrose and ascorbic acid, a combination of glucose, polyethylene glycol, sucrose, and ascorbic acid, etc. Furthermore, the carbon source can be preferably glucose, as it can form a dense carbon layer to reduce the particle size, which is beneficial for improving the compaction density of the phosphate cathode material.

In some embodiments, the grinding includes one or more of ball milling and sand milling.

In these embodiments, through ball milling and/or sand milling, different materials are uniformly mixed and sufficiently contacted, and the D50 particle size of the solid particles in the slurry is reduced, which is beneficial for improving the reaction rate and product uniformity in the subsequent steps.

In some embodiments, the step of mixing the precursor, the sodium source, the fluorine source, and the carbon source and grinding to obtain the slurry includes: mixing the precursor, the sodium source, the fluorine source, and the carbon source, then adding water and ball milling to obtain a slurry with a solid content in a range from 15% to 20% and a D50 particle size in a range from 3 µm to 5 µm.

It can be understood that the solid content of the slurry refers to the mass fraction of the solid in the slurry. For example, the solid content of the slurry can be but is not limited to 15%, 16%, 17%, 18%, 19%, or 20%; the D50 particle size of the solid particles in the slurry can be but is not limited to 3 µm, 3.5 µm, 4 µm, 4.5 µm, or 5 µm.

In S4, the slurry is subjected to the second drying treatment and the second sintering treatment to obtain the phosphate cathode material.

In some embodiments, the step of subjecting the slurry to the second drying treatment includes: subjecting the slurry to a second spray drying treatment with an inlet temperature of 240 °C to 260 °C and an outlet temperature of 90 °C to 100 °C to obtain a second dried material.

In these embodiments, controlling the inlet and outlet temperatures of the second spray drying treatment can sufficiently remove the moisture from the second dried material and prevent partial decomposition of the carbon source, which could reduce the final carbon content in the phosphate cathode material, due to an overhigh outlet temperature.

For example, the inlet temperature of the second spray drying treatment includes but is not limited to 240 °C, 242 °C, 244 °C, 246 °C, 248 °C, 250 °C, 252 °C, 254 °C, 256 °C, 258 °C, or 260 °C; the outlet temperature of the spray drying process includes but is not limited to 90 °C, 91 °C, 92 °C, 93 °C, 94 °C, 95 °C, 96 °C, 97 °C, 98 °C, 99 °C, or 100 °C.

In some embodiments, the second sintering treatment is performed at a sintering temperature in a range from 550 °C to 750 °C for a temperature holding period in a range from 8 hours to 12 hours.

In these embodiments, by performing the second sintering treatment at 550 °C to 750 °C for 8 hours to 12 hours, the energy consumption can be effectively controlled while preventing the formation of excessive impurity phases during sintering, which is beneficial for improving the crystallinity and purity of the phosphate cathode material, thereby enhancing the electrochemical performance, such as charge and discharge specific capacities.

For example, the sintering temperature of the second sintering treatment can be but is not limited to 550 °C, 560 °C, 570 °C, 580 °C, 590 °C, 600 °C, 610 °C, 620 °C, 630 °C, 640 °C, 650 °C, 660 °C, 670 °C, 680 °C, 690 °C, 700 °C, 710 °C, 720 °C, 730 °C, 740 °C, or 750 °C; the temperature holding period can be but is not limited to 8 hours, 8.5 hours, 9 hours, 9.5 hours, 10 hours, 10.5 hours, 11 hours, 11.5 hours, or 12 hours.

In some embodiments, the second sintering treatment is performed in a protective atmosphere, and the protective gas in the protective atmosphere includes at least one of nitrogen gas, helium gas, neon gas, argon gas, and xenon gas, and further preferably nitrogen gas or argon gas. In the protective atmosphere, the phosphate cathode material can be prevented from reacting with moisture or oxygen during the heating, holding, and cooling stages of the high-temperature sintering, thereby improving the purity of the phosphate cathode material and reducing adverse effects on the subsequent preparation processes and electrochemical performance of the cathode plate and the secondary battery.

In some embodiments, after the second sintering treatment, the method further includes following steps: crushing and sieving the sintered material obtained from the second sintering treatment to obtain a phosphate cathode material with a D50 particle size in a range from 6 µm to 8 µm and a D100 particle size smaller than or equal to 30 µm.

In these embodiments, by controlling the D50 particle size of the phosphate cathode material, the transport of Na⁺ can be accelerated, and the phosphate cathode material can be dispersed uniformly in the electrode slurry, which is beneficial for forming a flat and uniform cathode active coating, thereby enhancing the consistency and stability of the cathode plate.

For example, the D50 particle size of the phosphate cathode material can be but is not limited to 6 µm, 6.5 µm, 7 µm, 7.5 µm, or 8 µm; the D100 particle size of the phosphate cathode material can be but is not limited to 30 µm, 28 µm, 25 µm, 22 µm, 20 µm, 18 µm, 15 µm, 12 µm, or 10 µm.

In a third aspect, an embodiment of the present application provides a cathode plate, including the phosphate cathode material provided in the first aspect of the present application, or the phosphate cathode material prepared by the method provided in the second aspect of the present application.

In this embodiment, the cathode plate includes the above-described phosphate cathode material, and thus possesses the advantages such as high charge and discharge specific capacities, excellent rate performance, and superior cycling performance.

In a fourth aspect, an embodiment of the present application provides a secondary battery, including the cathode plate provided in the third aspect of the present application.

In this embodiment, the secondary battery includes the above-described cathode plate, and thus possesses the advantages such as high charge and discharge specific capacities, excellent rate performance, and superior cycling performance.

The following provides some specific examples. It should be understood that the examples described below are exemplary, and are only intended to explain the present application rather than being construed as limitation to the present application. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

### I. Preparation Methods

### Example 1

In the present example, a phosphate cathode material was prepared by a method as follows:
(1) Vanadium pentoxide (V₂O₅) and deionized water were mixed, and heated and stirred at 90 °C for 0.5 hours to ensure complete dissolution of the vanadium pentoxide (V₂O₅), resulting in an orange-red first solution. A dopant was added to the first solution, followed by slowly adding oxalic acid (H₂C₂O₄). After its color changed, the solution was heated and stirred at 90 °C for 1 hour to obtain a deep green second solution. Ammonium dihydrogen phosphate (NH₄H₂PO₄) was slowly added to the second solution, and after its color changed to clear blue, the solution was heated and stirred at 90 °C for 0.5 hours to obtain a clear blue mixed solution.
   The dopant included a first source and a second source. The first source was ferric oxide (Fe₂O₃), and the second source was titanium dioxide (TiO₂). The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.1:0.1.
(2) The mixed solution was spray dried to obtain a light green first dried material. The first dried material was subjected to a first sintering treatment at 750 °C for 1.5 hours in nitrogen atmosphere in a sintering furnace to obtain a deep green precursor.
(3) The precursor was uniformly mixed with sodium fluoride, a carbon source, and deionized water through ball milling, thereby obtaining a slurry with a solid content of 18% and a D50 particle size of 4 µm. The slurry was spray dried at an inlet temperature of 255 °C and an outlet temperature of 90 °C to obtain a gray-green second dried material. The second dried material was subjected to a second sintering treatment at 700 °C for 10 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The ratio of amount of substance of the phosphorus element in the precursor, the sodium element and the fluorine element in the sodium fluoride, and the carbon element in the carbon source was 1:1.4:1.4:0.6. The carbon source was glucose.

### Example 2

The method for preparing the phosphate cathode material provided in the present example was substantially the same or similar as that in Example 1, and the difference was in that:
(1) Vanadium pentoxide (V₂O₅) and deionized water were mixed, and heated and stirred at 80 °C for 0.5 hours to ensure complete dissolution of the vanadium pentoxide (V₂O₅), resulting in an orange-red first solution. A dopant was added to the first solution, followed by slowly adding oxalic acid (H₂C₂O₄). After its color changed, the solution was heated and stirred at 90 °C for 0.5 hours to obtain a deep green second solution. Ammonium dihydrogen phosphate (NH₄H₂PO₄) was slowly added to the second solution, and after its color changed to clear blue, the solution was heated and stirred at 90 °C for 12 min to obtain a clear blue mixed solution.
   The dopant included a first source and a second source. The first source was ferric oxide (Fe₂O₃), and the second source was titanium dioxide (TiO₂). The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.2:0.1.
(2) The mixed solution was spray dried to obtain a light green first dried material. The first dried material was subjected to a first sintering treatment at 700 °C for 1 hour in nitrogen atmosphere in a sintering furnace to obtain a deep green precursor.
(3) The precursor was uniformly mixed with sodium fluoride, a carbon source, and deionized water through ball milling, thereby obtaining a slurry with a solid content of 15% and a D50 particle size of 3 µm. The slurry was spray dried at an inlet temperature of 250 °C and an outlet temperature of 90 °C to obtain a gray-green second dried material. The second dried material was subjected to a second sintering treatment at 550 °C for 8 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The ratio of amount of substance of the phosphorus element in the precursor, the sodium element and the fluorine element in the sodium fluoride, and the carbon element in the carbon source was 1:1.4:1.4:0.6. The carbon source was glucose.

### Example 3

The method for preparing the phosphate cathode material provided in the present example was substantially the same or similar as that in Example 1, and the difference was in that:
(1) Vanadium pentoxide (V₂O₅) and deionized water were mixed, and heated and stirred at 90 °C for 1.5 hours to ensure complete dissolution of the vanadium pentoxide (V₂O₅), resulting in an orange-red first solution. A dopant was added to the first solution, followed by slowly adding oxalic acid (H₂C₂O₄). After its color changed, the solution was heated and stirred at 95 °C for 1 hour to obtain a deep green second solution. Ammonium dihydrogen phosphate (NH₄H₂PO₄) was slowly added to the second solution, and after its color changed to clear blue, the solution was heated and stirred at 100 °C for 36 min to obtain a clear blue mixed solution.
   The dopant included a first source and a second source. The first source was ferric oxide (Fe₂O₃), and the second source was titanium dioxide (TiO₂). The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.2:0.2.
(2) The mixed solution was spray dried to obtain a light green first dried material. The first dried material was subjected to a first sintering treatment at 750 °C for 3 hours in nitrogen atmosphere in a sintering furnace to obtain a deep green precursor.
(3) The precursor was uniformly mixed with sodium fluoride, a carbon source, and deionized water through ball milling, thereby obtaining a slurry with a solid content of 20% and a D50 particle size of 5 µm. The slurry was spray dried at an inlet temperature of 260 °C and an outlet temperature of 90 °C to obtain a gray-green second dried material. The second dried material was subjected to a second sintering treatment at 750 °C for 12 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The ratio of amount of substance of the phosphorus element in the precursor, the sodium element and the fluorine element in the sodium fluoride, and the carbon element in the carbon source was 1:1.4:1.4:0.6. The carbon source was glucose.

### Example 4

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.05:0.05.

### Example 5

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.3:0.3.

### Example 6

The method for preparing the phosphate cathode material provided in the present example was substantially the same or similar as that in Example 1, and the difference was in that:

The first source was ferroferric oxide (Fe₃O₄), and the second source was trimanganese tetraoxide (Mn₃O₄). The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the manganese element in the second source was 1:3:1:0.1:0.1.

### Example 7

The method for preparing the phosphate cathode material provided in the present example was substantially the same or similar as that in Example 1, and the difference was in that:

The first source was manganese carbonate (MnCO₃), and the second source was aluminum oxide (Al₂O₃). The ratio of amount of substance of the vanadium element in the vanadium pentoxide (V₂O₅), the oxalic acid, the phosphorus element in the ammonium dihydrogen phosphate (NH₄H₂PO₄), the manganese element in the first source, and the aluminum element in the second source was 1:3:1:0.1:0.1.

### Example 8

The method for preparing the phosphate cathode material provided in the present example was substantially the same or similar as that in Example 1, and the difference was in that:

The first source was titanium dioxide (TiO₂), and the second source was magnesium oxide (MgO). The ratio of amount of substance of the vanadium element in the vanadium pentoxide (V₂O₅), the oxalic acid, the phosphorus element in the ammonium dihydrogen phosphate (NH₄H₂PO₄), the titanium element in the first source, and the magnesium element in the second source was 1:3:1:0.1:0.1.

### Example 9

The method for preparing the phosphate cathode material provided in the present example was substantially the same or similar as that in Example 1, and the difference was in that:

The first source was ferric oxide (Fe₂O₃), and no second source was included in the dopant. The ratio of amount of substance of the vanadium element in the vanadium pentoxide (V₂O₅), the oxalic acid, the phosphorus element in the ammonium dihydrogen phosphate (NH₄H₂PO₄), and the iron element in the first source was 1:3:1:0.1.

### Example 10

The method for preparing the phosphate cathode material provided in the present example was substantially the same or similar as that in Example 1, and the difference was in that:

The second source was titanium dioxide (TiO₂), and no first source was included in the dopant. The ratio of amount of substance of the vanadium element in the vanadium pentoxide (V₂O₅), the oxalic acid, the phosphorus element in the ammonium dihydrogen phosphate (NH₄H₂PO₄), and the titanium element in the second source was 1:3:1:0.1.

### Example 11

The method for preparing the phosphate cathode material provided in the present example was substantially the same or similar as that in Example 1, and the difference was in that:

The first source was ferric oxide (Fe₂O₃) and aluminum oxide (Al₂O₃), and the second source was titanium dioxide (TiO₂) and manganese dioxide (MnO₂). The ratio of amount of substance of the vanadium element in the vanadium pentoxide (V₂O₅), the oxalic acid, the phosphorus element in the ammonium dihydrogen phosphate (NH₄H₂PO₄), the iron element in the first source, the aluminum element in the first source, the titanium element in the second source, and the manganese element in the second source was 1:3:1:0.1:0.1:0.1:0.1.

### Example 12

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:2.5:1:0.1:0.1.

### Example 13

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3.5:1:0.1:0.1.

### Example 14

The method for preparing the phosphate cathode material provided in the present example was substantially the same or similar as that in Example 1, and the difference was in that:

In step (2), the first sintering treatment was performed at 700 °C for 3 hours.

### Example 15

The method for preparing the phosphate cathode material provided in the present example was substantially the same or similar as that in Example 1, and the difference was in that:

The ratio of amount of substance of the phosphorus element in the precursor, the sodium element and the fluorine element in the sodium fluoride, and the carbon element in the carbon source was 1:1.4:1.4:0.48. The carbon source was glucose.

### Example 16

The method for preparing the phosphate cathode material provided in the present example was substantially the same or similar as that in Example 1, and the difference was in that:

The ratio of amount of substance of the phosphorus element in the precursor, the sodium element and the fluorine element in the sodium fluoride, and the carbon element in the carbon source was 1:1.4:1.4:0.9. The carbon source was glucose.

### Example 17

The method for preparing the phosphate cathode material provided in the present example was substantially the same or similar as that in Example 1, and the difference was in that:

The ratio of amount of substance of the phosphorus element in the precursor, the sodium element and the fluorine element in the sodium fluoride, and the carbon source was 1:1.4:1.4:0.1. The carbon source was PEG-2000.

### Example 18

The method for preparing the phosphate cathode material provided in the present example was substantially the same or similar as that in Example 1, and the difference was in that:

The ratio of amount of substance of the phosphorus element in the precursor, the sodium element and the fluorine element in the sodium fluoride, and the carbon element in the carbon source was 1:1.4:1.4:0.6. The carbon source was ascorbic acid.

### Example 19

The method for preparing the phosphate cathode material provided in the present example was substantially the same or similar as that in Example 1, and the difference was in that the vanadium source, the phosphorus source, the sodium source, and the fluorine source were different, specifically as follows:
(1) Ammonium metavanadate (NH₄VO₃) and deionized water were mixed, and heated and stirred at 80 °C for 0.5 hours to ensure complete dissolution of the ammonium metavanadate (NH₄VO₃), resulting in an orange-red first solution. A dopant was added to the first solution, followed by slowly adding oxalic acid (H₂C₂O₄). After its color changed, the solution was heated and stirred at 90 °C for 1 hour to obtain a deep green second solution. Diammonium hydrogen phosphate ((NH₄)₂HPO₄) was slowly added to the second solution, and after its color changed to clear blue, the solution was heated and stirred at 90 °C for 0.5 hours to obtain a clear blue mixed solution.
   The dopant included a first source and a second source. The first source was ferric oxide (Fe₂O₃), and the second source was titanium dioxide (TiO₂). The ratio of amount of substance of the vanadium element in the ammonium metavanadate (NH₄VO₃), the oxalic acid, the phosphorus element in the diammonium hydrogen phosphate ((NH₄)₂HPO₄), the iron element in the first source, and the titanium element in the second source was 1:3:1:0.1:0.1.
(2) The mixed solution was spray dried to obtain a light green first dried material. The first dried material was subjected to a first sintering treatment at 750 °C for 1.5 hours in nitrogen atmosphere in a sintering furnace to obtain a deep green precursor.
(3) The precursor was uniformly mixed with sodium hydroxide, ammonium fluoride, a carbon source, and deionized water through ball milling, thereby obtaining a slurry with a solid content of 15% and a D50 particle size of 4 µm. The slurry was spray dried at an inlet temperature of 250 °C and an outlet temperature of 90 °C to obtain a gray-green second dried material. The second dried material was subjected to a second sintering treatment at 700 °C for 10 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The ratio of amount of substance of the phosphorus element in the precursor, the sodium element in the sodium hydroxide, the fluorine element in the ammonium fluoride, and the carbon element in the carbon source was 1:1.4:1.4:0.1. The carbon source was glucose.

### Example 20

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 0.9:3:1:0.1:0.1.

### Example 21

The method for preparing the phosphate cathode material provided in the present example was substantially the same or similar as that in Example 1, and the difference was in that:

The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.1:0.25.

### Example 22

The method for preparing the phosphate cathode material provided in the present example was substantially the same or similar as that in Example 1, and the difference was in that:
The ratio of amount of substance of the vanadium element in the vanadium pentoxide (V₂O₅), the oxalic acid, the phosphorus element in the ammonium dihydrogen phosphate (NH₄H₂PO₄), the iron element in the first source, and the titanium element in the second source was 1:3:1:0.25:0.1.

### Example 23

The method for preparing the phosphate cathode material provided in the present example was substantially the same or similar as that in Example 1, and the difference was in that:
The ratio of amount of substance of the phosphorus element in the precursor, the sodium element and the fluorine element in the sodium fluoride, and the carbon element in the carbon source was 1:1.3:1.3:0.6. The carbon source was glucose.

### Example 24

The method for preparing the phosphate cathode material provided in the present example was substantially the same or similar as that in Example 1, and the difference was in that:
The ratio of amount of substance of the phosphorus element in the precursor, the sodium element and the fluorine element in the sodium fluoride, and the carbon element in the carbon source was 1:1.5:1.5:0.6. The carbon source was glucose.

### Example 25

The method for preparing the phosphate cathode material provided in the present example was substantially the same or similar as that in Example 1, and the difference was in that:
The ratio of amount of substance of the phosphorus element in the precursor, the sodium element and the fluorine element in the sodium fluoride, and the carbon element in the carbon source was 1:1.2:1.2:0.6. The carbon source was glucose.

### Example 26

The method for preparing the phosphate cathode material provided in the present example was substantially the same or similar as that in Example 1, and the difference was in that:
The ratio of amount of substance of the phosphorus element in the precursor, the sodium element and the fluorine element in the sodium fluoride, and the carbon element in the carbon source was 1:1.6:1.6:0.6. The carbon source was glucose.

### Comparative Example 1

The method for preparing the phosphate cathode material provided in the present comparative example was substantially the same or similar as that in Example 1, and the difference was in that:
The specific method was as follows, wherein in step (1) no dopant was added.
(1) Vanadium pentoxide (V₂O₅) and deionized water were mixed, and heated and stirred at 90 °C for 0.5 hours to ensure complete dissolution of the vanadium pentoxide (V₂O₅), resulting in an orange-red first solution. Oxalic acid (H₂C₂O₄) was slowly added to the first solution. After its color changed, the solution was heated and stirred at 90 °C for 1 hour to obtain a deep green second solution. Ammonium dihydrogen phosphate (NH₄H₂PO₄) was slowly added to the second solution, and after its color changed to clear blue, the solution was heated and stirred at 90 °C for 0.5 hours to obtain a clear blue mixed solution.
   The ratio of amount of substance of the vanadium element in the vanadium pentoxide (V₂O₅), the oxalic acid, and the phosphorus element in the ammonium dihydrogen phosphate (NH₄H₂PO₄) was 1:3:1.
(2) was the same as step (2) in Example 1.
(3) was the same as step (3) in Example 1.

### Comparative Example 2

The method for preparing the phosphate cathode material provided in the present comparative example was substantially the same or similar as that in Example 1, and the difference was in that:
The specific method was as follows, wherein in step (1) no oxalic acid was added.
(1) Vanadium pentoxide (V₂O₅) and deionized water were mixed, and heated and stirred at 90 °C for 0.5 hours to ensure complete dissolution of the vanadium pentoxide (V₂O₅), resulting in an orange-red first solution. A dopant was added to the first solution, which was then heated and stirred at 90 °C for 1 hour to obtain a red second solution. Ammonium dihydrogen phosphate (NH₄H₂PO₄) was slowly added to the second solution, and after its color changed to light blue, the solution was heated and stirred at 90 °C for 0.5 hours to obtain a clear blue mixed solution.
   The dopant included a first source and a second source. The first source was ferric oxide (Fe₂O₃), and the second source was titanium dioxide (TiO₂). The ratio of amount of substance of the vanadium element in the vanadium pentoxide (V₂O₅), the phosphorus element in the ammonium dihydrogen phosphate (NH₄H₂PO₄), the iron element in the first source, and the titanium element in the second source was 1:1:0.1:0.1.
(2) was the same as step (2) in Example 1.
(3) was the same as step (3) in Example 1.

### Comparative Example 3

The method for preparing the phosphate cathode material provided in the present comparative example was substantially the same or similar as that in Example 1, and the difference was in that:
In step (1), the oxalic acid was replaced with an equal molar amount of citric acid.

### Comparative Example 4

The method for preparing the phosphate cathode material provided in the present comparative example was substantially the same or similar as that in Example 1, and the difference was in that:
The specific method was as follows, wherein in step (2) the first dried material was not subjected to a first sintering treatment:
(1) The mixed solution was obtained according to step (1) of Example 1.
(2) The mixed solution was spray dried to obtain a light green first dried material.
(3) The first dried material was uniformly mixed with sodium fluoride, a carbon source, and deionized water through ball milling, thereby obtaining a slurry with a solid content of 15% and a D50 particle size of 4 µm. The slurry was spray dried at an inlet temperature of 250 °C and an outlet temperature of 90 °C to obtain a gray-green second dried material. The second dried material was subjected to a second sintering treatment at 700 °C for 10 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The ratio of amount of substance of the phosphorus element in the first dried material, the sodium element and the fluorine element in the sodium fluoride, and the carbon element in the carbon source was 1:1.4:1.4:0.1. The carbon source was glucose.

### Comparative Example 5

The method for preparing the phosphate cathode material provided in the present comparative example was substantially the same or similar as that in Example 1, and the difference was in that:
The specific method was as follows, wherein the dopant was not added in step (1) but in step (3):
(1) Vanadium pentoxide (V₂O₅) and deionized water were mixed, and heated and stirred at 90 °C for 0.5 hours to ensure complete dissolution of the vanadium pentoxide (V₂O₅), resulting in an orange-red first solution. Oxalic acid (H₂C₂O₄) was slowly added to the first solution. After its color changed, the solution was heated and stirred at 90 °C for 0.5 hours to obtain a deep green second solution. Ammonium dihydrogen phosphate (NH₄H₂PO₄) was slowly added to the second solution, and after its color changed to clear blue, the solution was heated and stirred at 90 °C for 0.5 hours to obtain a clear blue mixed solution.
   The ratio of amount of substance of the vanadium element in the vanadium pentoxide (V₂O₅), the oxalic acid, and the phosphorus element in the ammonium dihydrogen phosphate (NH₄H₂PO₄) was 1:3:1.
(2) The mixed solution was spray dried to obtain a light green first dried material. The first dried material was subjected to a first sintering treatment at 750 °C for 1.5 hours in nitrogen atmosphere in a sintering furnace to obtain a deep green precursor.
(3) The precursor was uniformly mixed with sodium fluoride, a carbon source, a dopant, and deionized water through ball milling, thereby obtaining a slurry with a solid content of 15% and a D50 particle size of 4 µm. The slurry was spray dried at an inlet temperature of 250 °C and an outlet temperature of 90 °C to obtain a gray-green second dried material. The second dried material was subjected to a second sintering treatment at 700 °C for 10 hours in nitrogen atmosphere in a sintering furnace to obtain a sintered product. The sintered product was crushed and sieved to obtain the phosphate cathode material with a D50 particle size of 6 µm and a D100 particle size ≤30 µm.

The carbon source was glucose. The dopant included a first source and a second source. The first source was ferric oxide (Fe₂O₃), and the second source was titanium dioxide (TiO₂). The ratio of amount of substance of the phosphorus element in the precursor, the sodium element and the fluorine element in the sodium fluoride, and the carbon element in the carbon source, the iron element in the first source, and the titanium element in the second source was 1:1.4:1.4:0.6:0.1:0.1.

### II. Test Methods

### 1. Properties of Phosphate Cathode Materials

(1) Scanning Electron Microscopy (SEM) Testing: The morphology was characterized using the Quanta 200FEG field emission scanning electron microscope, Merlin Compact, manufactured by Zeiss Company.
(2) Transmission Electron Microscopy (TEM) Testing: The morphology was analyzed and the carbon layer thickness was measured using the FEI Tecnai G2 F20 X-Twin transmission electron microscope manufactured by Thermo Fisher Scientific (USA).
(3) Element Contents: The contents of elements were tested using an inductively coupled plasma optical emission spectrometer (ICP-OES), and carbon content was measured using an infrared carbon-sulfur analyzer.
(4) Compaction Density: The compaction density was tested using the UTM7305 battery powder compaction density testing machine, provided by Shenzhen Suns Technology Stock Co., Ltd., with a testing pressure of 3 tons and a compression time of 30 seconds.
(5) Specific Surface Area: The specific surface area was tested using the BELSORP MaxII specific surface area analyzer, manufactured by Microtrac-Bell (Japan).
(6) Powder Resistivity: The resistivity was measured using the four-probe method, with a testing pressure of 10 MPa.

### 2. Properties of Secondary Batteries

The phosphate cathode material was mixed with conductive carbon black and PVDF binder in a mass ratio of 90:5:5 to form a cathode slurry. The cathode slurry was coated onto aluminum foil with a thickness of 12 µm to form a cathode slurry layer with a thickness of 80 µm. The coated foil was dried in an oven at 110 °C for 10 hours, and then punched into a circular electrode plate with a diameter of 15 mm. The electrode plate was then roller pressed to reach a compaction density of 1.8 g/cm³, thereby obtaining a cathode plate.

An electrolyte solution at a concentration of 1 M was prepared by dissolving sodium hexafluorophosphate (NaPF₆) as a sodium salt in a mixture of ethylene carbonate (EC), ethyl methyl carbonate (EMC), and diethyl carbonate (DEC) in a volume ratio of 1:1:1 as an organic solvent. The counter electrode was a sodium plate with a purity of 99%. The battery was assembled in a LG2400/1000TS glove box, manufactured by Weige Gas Purification Technology (Suzhou) Co., Ltd., using the counter electrode, the cathode plate, and the electrolyte solution to form a button-type half-cell.

The rate performance of the button-type half-cell was tested using the CT3002A battery testing system, manufactured by Wuhan Land Electronics Co., Ltd. The rate performance was tested at a temperature of 25 °C, with a voltage range from 2 V to 4.35 V and a current rate range from 0.1 C to 3 C.

### III. Analysis of Test Results of Examples and Comparative Examples

The test results are shown in FIG. 2 to FIG. 5 and Table 1 to Table 2.

**Table 1**

| Solution | Element content (mass fraction) | | | | | | |
|---|---|---|---|---|---|---|---|
| | Na | V | A | B | P | F | C |
| Example 1 | 16.61 | 21.54 | 1.01 | 1 | 14.78 | 14.43 | 2.5 |
| Example 2 | 16.34 | 20.48 | 1.98 | 1.03 | 14.45 | 15.09 | 2.45 |
| Example 3 | 16.2 | 19.63 | 2.01 | 1.99 | 14.37 | 15.17 | 2.44 |
| Example 4 | 16.5 | 22.89 | 0.48 | 0.49 | 14.21 | 14.8 | 2.46 |
| Example 5 | 16.61 | 17.95 | 2.99 | 3 | 14.43 | 14.39 | 2.46 |
| Example 6 | 16.38 | 22.01 | 1 | 1 | 14.52 | 14.46 | 2.48 |
| Example 7 | 16.14 | 21.93 | 0.99 | 0.99 | 14.63 | 14.69 | 2.47 |
| Example 8 | 16.57 | 21.84 | 0.99 | 1 | 14.82 | 14.15 | 2.5 |
| Example 9 | 16.25 | 23.01 | 1.02 | 0 | 14.49 | 14.6 | 2.5 |
| Example 10 | 16.30 | 22.96 | 0.98 | 0 | 14.61 | 14.52 | 2.5 |
| Example 11 | 16.12 | 19.58 | 2.01 | 2 | 14.40 | 17.26 | 2.48 |
| Example 12 | 16.1 | 21.8 | 1 | 0.99 | 14.26 | 15.22 | 2.4 |
| Example 13 | 16.22 | 21.94 | 0.98 | 1 | 14.46 | 14.77 | 2.51 |
| Example 14 | 16.21 | 21.76 | 0.97 | 0.99 | 14.14 | 15.3 | 2.44 |
| Example 15 | 16.35 | 22.04 | 1.02 | 1 | 14.72 | 14.24 | 2.2 |
| Example 16 | 16.47 | 21.87 | 1 | 0.97 | 14.72 | 14.34 | 2.74 |
| Example 17 | 16.22 | 21.97 | 0.98 | 1.02 | 14.82 | 14.36 | 2.46 |
| Example 18 | 16.61 | 22.1 | 0.99 | 1 | 14.53 | 14.14 | 2.4 |
| Example 19 | 16.46 | 21.69 | 1 | 0.98 | 14.71 | 14.53 | 2.48 |
| Example 20 | 16.66 | 22.11 | 0.97 | 0.99 | 14.49 | 14.15 | 2.51 |
| Example 21 | 16.25 | 20.44 | 1.01 | 2.47 | 14.36 | 14.84 | 2.49 |
| Example 22 | 16.51 | 20.52 | 2.49 | 0.96 | 14.71 | 14.18 | 2.54 |
| Example 23 | 15.96 | 23.89 | 1 | 1 | 14.55 | 14.97 | 2.48 |
| Example 24 | 17.01 | 24.00 | 1.02 | 0.99 | 14.61 | 13.75 | 2.46 |
| Example 25 | 15.47 | 23.98 | 0.98 | 1 | 14.72 | 15.2 | 2.47 |
| Example 26 | 17.54 | 24.11 | 1 | 1.01 | 14.38 | 13.34 | 2.5 |
| Comparative Example 1 | 16.65 | 23.98 | 0 | 0 | 14.56 | 14.18 | 2.47 |
| Comparative Example 2 | 16.45 | 22.05 | 1.01 | 1 | 14.39 | 14.47 | 2.44 |
| Comparative Example 3 | 16.25 | 23.89 | 0.99 | 0.98 | 14.29 | 14.94 | 2.4 |
| Comparative Example 4 | 16.31 | 23.92 | 0.9 | 1 | 14.12 | 15.02 | 2.38 |
| Comparative Example 5 | 16.42 | 23.99 | 0.56 | 0.62 | 14.29 | 13.49 | 2.41 |

| Solution | Formula of core | Carbon layer thickness (nm) |
|---|---|---|
| Example 1 | Na₃V_{1.8}Fe_{0.1}Ti_{0.1}(PO₄)₂F₃ | 1.1 |
| Example 2 | Na₃V_{1.7}Fe_{0.2}Ti_{0.1}(PO₄)₂F₃ | 1.02 |
| Example 3 | Na₃V_{1.6}Fe_{0.2}Ti_{0.2}(PO₄)₂F₃ | 1 |
| Example 4 | Na₃V_{1.9}Fe_{0.05}Ti_{0.05}(PO₄)₂F₃ | 1.01 |
| Example 5 | Na₃V_{1.4}Fe_{0.3}Ti_{0.3}(PO₄)₂F₃ | 1 |
| Example 6 | Na₃V_{1.8}Fe_{0.1}Mn_{0.1}(PO₄)₂F₃ | 1.05 |
| Example 7 | Na₃V_{1.8}Mn_{0.1}Al_{0.1}(PO₄)₂F₃ | 1.04 |
| Example 8 | Na₃V_{1.8}Ti_{0.1}Mg_{0.1}(PO₄)₂F₃ | 1.1 |
| Example 9 | Na₃V_{1.9}Fe_{0.1}(PO₄)₂F₃ | 1.11 |
| Example 10 | Na₃V_{1.9}Ti_{0.1}(PO₄)₂F₃ | 1.1 |
| Example 11 | Na₃V_{1.6}(FeAlMnTi)_{0.1}(PO₄)₂F₃ | 1.08 |
| Example 12 | Na₃V_{1.8}Fe_{0.1}Ti_{0.1}(PO₄)₂F₃ | 0.96 |
| Example 13 | Na₃V_{1.8}Fe_{0.1}Ti_{0.1}(PO₄)₂F₃ | 1.14 |
| Example 14 | Na₃V_{1.8}Fe_{0.1}Ti_{0.1}(PO₄)₂F₃ | 0.99 |
| Example 15 | Na₃V_{1.8}Fe_{0.1}Ti_{0.1}(PO₄)₂F₃ | 0.8 |
| Example 16 | Na₃V_{1.8}Fe_{0.1}Ti_{0.1}(PO₄)₂F₃ | 1.5 |
| Example 17 | Na₃V_{1.8}Fe_{0.1}Ti_{0.1}(PO₄)₂F₃ | 0.98 |
| Example 18 | Na₃V_{1.8}Fe_{0.1}Ti_{0.1}(PO₄)₂F₃ | 0.9 |
| Example 19 | Na₃V_{1.8}Fe_{0.1}Ti_{0.1}(PO₄)₂F₃ | 0.9 |
| Example 20 | Na₃V_{1.8}Fe_{0.1}Ti_{0.1}(PO₄)₂F₃ | 1.05 |
| Example 21 | Na₃V_{1.65}Fe_{0.1}Ti_{0.25}(PO₄)₂F₃ | 1.09 |
| Example 22 | Na₃V_{1.65}Fe_{0.25}Ti_{0.1}(PO₄)₂F₃ | 1.12 |
| Example 23 | Na_{2.95}V_{1.8}Fe_{0.1}Ti_{0.1}(PO₄)₂F_{2.95} | 1.08 |
| Example 24 | Na_{3.05}V_{1.8}Fe_{0.1}Ti_{0.1}(PO₄)₂F_{3.05} | 1.07 |
| Example 25 | Na_{2.9}V_{1.8}Fe_{0.1}Ti_{0.1}(PO₄)₂F_{2.9} | 1.07 |
| Example 26 | Na_{3.1}V_{1.8}Fe_{0.1}Ti_{0.1}(PO₄)₂F_{3.1} | 1.09 |
| Comparative Example 1 | Na₃V₂(PO₄)₂F₃ | 0.99 |
| Comparative Example 2 | Na₃V_{1.8}Fe_{0.1}Ti_{0.1}(PO₄)₂F₃ | 0.97 |
| Comparative Example 3 | Na₃V_{1.8}Fe_{0.1}Ti_{0.1}(PO₄)₂F₃ | 0.92 |
| Comparative Example 4 | Na₃V_{1.8}Fe_{0.1}Ti_{0.1}(PO₄)₂F₃ | 0.89 |
| Comparative Example 5 | Na₃V₂Fe_{0.1}Ti_{0.1}(PO₄)₂F₃ | 0.93 |

**Table 2**

| Solution | Compaction density (g/cm³) | BET (m²/g) | Powder resistivity (Ω·cm) | Average voltage plateau (V) |
|---|---|---|---|---|
| Example 1 | 2.1 | 12.9 | 100 | 3.7 |
| Example 2 | 2.03 | 10 | 120 | 3.68 |
| Example 3 | 2.08 | 15.3 | 110 | 3.68 |
| Example 4 | 2.07 | 12.4 | 125 | 3.66 |
| Example 5 | 2.09 | 12.1 | 160 | 3.65 |
| Example 6 | 2.05 | 13 | 157 | 3.65 |
| Example 7 | 2.09 | 12 | 170 | 3.65 |
| Example 8 | 2.04 | 12 | 180 | 3.66 |
| Example 9 | 2.04 | 12.6 | 182 | 3.67 |
| Example 10 | 2.02 | 14.9 | 200 | 3.64 |
| Example 11 | 2.02 | 14.8 | 208 | 3.64 |
| Example 12 | 2.08 | 12.1 | 180 | 3.66 |
| Example 13 | 2.07 | 12.5 | 182 | 3.67 |
| Example 14 | 2.07 | 12.6 | 190 | 3.66 |
| Example 15 | 2.04 | 13.4 | 177 | 3.664 |
| Example 16 | 2.07 | 12.4 | 195 | 3.661 |
| Example 17 | 2.09 | 12 | 200 | 3.667 |
| Example 18 | 2.08 | 12 | 200 | 3.67 |
| Example 19 | 2.02 | 11 | 203 | 3.65 |
| Example 20 | 2.06 | 11 | 180 | 3.67 |
| Example 21 | 2.064 | 10.2 | 160 | 3.68 |
| Example 22 | 2.066 | 10.5 | 160 | 3.677 |
| Example 23 | 2.01 | 11 | 240 | 3.62 |
| Example 24 | 2.005 | 11 | 220 | 3.61 |
| Example 25 | 2.002 | 11 | 300 | 3.61 |
| Example 26 | 2.0 | 11 | 210 | 3.611 |
| Comparative Example 1 | 2.0 | 11 | 300 | 3.6 |
| Comparative Example 2 | 1.99 | 8.7 | 261 | 3.6 |
| Comparative Example 3 | 1.95 | 7 | 2000 | 3.6 |
| Comparative Example 4 | 1.8 | 5 | 7000 | 3.6 |
| Comparative Example 5 | 1.9 | 7 | 5000 | 3.63 |

| Solution | 0.1 C initial charge specific capacity (mAh/g) | 0.1 C initial discharge specific capacity (mAh/g) | 0.1 C initial Coulombic efficiency (%) | 1 C initial discharge specific capacity (mAh/g) | 5 C initial discharge specific capacity (mAh/g) | 1C/0.1C rate performance (%) | 1000 cycle capacity retention at 1C, room temperature (%) |
|---|---|---|---|---|---|---|---|
| Example 1 | 127 | 116 | 92 | 114 | 110 | 98.27 | 80 |
| Example 2 | 125 | 114 | 92 | 112 | 108 | 98.24 | 77 |
| Example 3 | 126 | 116 | 93 | 113 | 109 | 97.41 | 77.4 |
| Example 4 | 126 | 114 | 90.4 | 111 | 107 | 97.36 | 77.6 |
| Example 5 | 125 | 112 | 90.1 | 110 | 106 | 98.21 | 75 |
| Example 6 | 125.2 | 112.5 | 90.1 | 111 | 107 | 98.5 | 76 |
| Example 7 | 124 | 112 | 90.4 | 110 | 107 | 98.21 | 75.2 |
| Example 8 | 124 | 111.9 | 90.24 | 109 | 107 | 98.3 | 75 |
| Example 9 | 123 | 111 | 90.24 | 108 | 105 | 97.2 | 75 |
| Example 10 | 123 | 111 | 90.24 | 108 | 105 | 97.2 | 74.4 |
| Example 11 | 123.2 | 111 | 90.11 | 108 | 105 | 97.2 | 74.4 |
| Example 12 | 124.5 | 112 | 91 | 110 | 106 | 98.21 | 76.5 |
| Example 13 | 124.2 | 111.9 | 90.7 | 110 | 106 | 98.3 | 74.1 |
| Example 14 | 123.7 | 111.5 | 90.5 | 109 | 104 | 97.75 | 75.8 |
| Example 15 | 124.1 | 113 | 91.5 | 109 | 104 | 94.46 | 73 |
| Example 16 | 122 | 112 | 91.7 | 107 | 102 | 95.53 | 70 |
| Example 17 | 122.7 | 112.4 | 91.9 | 107.8 | 102.5 | 95.9 | 71 |
| Example 18 | 122.3 | 112.2 | 92 | 107.2 | 102.2 | 95.54 | 72 |
| Example 19 | 122.1 | 110 | 90.1 | 107 | 101 | 94.39 | 71.68 |
| Example 20 | 123 | 113 | 91.86 | 111 | 105 | 94.5 | 73 |
| Example 21 | 121 | 111 | 91.7 | 109 | 102 | 93.57 | 72 |
| Example 22 | 120 | 110 | 91.66 | 109 | 100 | 91.74 | 72 |
| Example 23 | 118 | 107 | 93.04 | 103 | 95 | 92.23 | 70 |
| Example 24 | 122 | 109 | 90 | 105 | 96 | 91.4 | 68 |
| Example 25 | 115 | 105 | 90 | 100 | 92 | 92 | 70 |
| Example 26 | 125 | 109 | 90 | 107 | 98 | 91.58 | 66 |
| Comparative Example 1 | 120 | 107 | 90 | 93 | 90 | 86.91 | 65 |
| Comparative Example 2 | 116 | 100 | 90 | 91 | 87 | 91 | 61 |
| Comparative Example 3 | 115 | 99 | 89 | 90 | 85 | 90.90 | 51 |
| Comparative Example 4 | 115 | 100 | 88~90 | 90 | 83 | 90 | 48 |
| Comparative Example 5 | 118 | 100 | 88~90 | 92 | 84 | 92 | 49 |

It can be seen from Table 1 that in the phosphate cathode materials in Examples 1 to 26, the mass fractions of elements are controlled within the following ranges: element Na ranges from 15.47% to 17.54%, element V ranges from 17.95% to 24.11%, element A ≤2.99%, element B ≤3%, element P ranges from 14.14% to 14.82%, element F ranges from 13.34% to 17.26%, and element C ranges from 2.2% to 2.74%. Additionally, TEM testing reveals that the carbon layer thickness is in a range from 0.8 nm to 1.5 nm. This confirms that the phosphate cathode material includes a core and a carbon layer coated on the core, and the core satisfies the following formula: Na₃V_{2-x-y}AₓB_{y}(PO₄)₂F₃, where 0≤x≤0.5, 0≤y≤0.5, and x and y are not simultaneously zero.

It can be seen from Table 2 that the phosphate cathode materials in Examples 1 to 26 possess the following properties: the compaction density ranges from 2 g/cm³ to 2.1 g/cm³, the BET specific surface area ranges from 10 m²/g to 15.3 m²/g, the powder resistivity ranges from 100 Ω·cm to 300 Ω·cm, the average voltage plateau ranges from 3.61 V to 3.7 V, the initial charge specific capacity at 0.1 C ranges from 115 mAh/g to 127 mAh/g, the initial discharge specific capacity at 0.1 C ranges from 105 mAh/g to 116 mAh/g, the initial Coulombic efficiency at 0.1 C ranges from 90% to 93.04%, the initial discharge specific capacity at 1 C ranges from 100 mAh/g to 114 mAh/g, the initial discharge specific capacity at 5 C ranges from 92 mAh/g to 110 mAh/g, the 1C/0.1C rate performance ranges from 91.4% to 98.5%, and the capacity retention at room temperature after 1000 cycles at 1 C ranges from 66% to 80%.

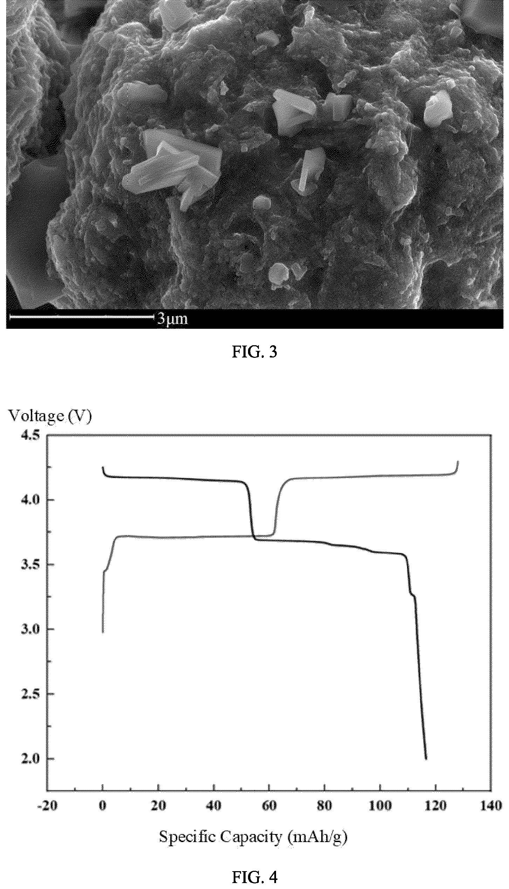

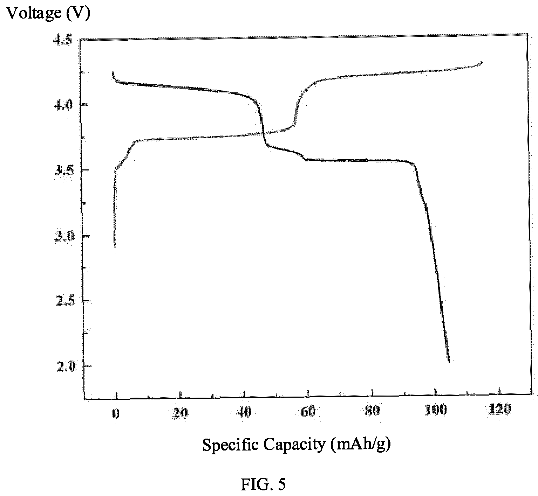

It can be seen from FIG. 2 and FIG. 3 that the phosphate cathode material of Example 1 has a dense and smooth surface without observable crystalline particles, which results in a higher compaction density and BET specific surface area. In contrast, in the phosphate cathode material of Comparative Example 1, the surface of the carbon layer is porous and wrinkled, and distinct crystalline particles are observed, which negatively affects the compaction density and BET specific surface area. From the comparison between FIG. 4 and FIG. 5, it can be seen that compared to Comparative Example 1, the phosphate cathode material in Example 1 has a higher and more stable discharge plateau in the charge and discharge curves. According to Table 2, compared to Comparative Example 1, Example 1, which is doped with elements Fe and Ti, exhibits significant improved compaction density, BET specific surface area, and electrochemical performance, demonstrating that the co-doping of elements Fe and Ti not only enhances the electronic conductivity of the phosphate cathode material but also effectively elevates the average voltage plateau, as well as improving the compaction density and BET specific surface area, ensuring excellent performance in terms of capacity, rate performance, and cycling performance.

In comparison with Example 1, Comparative Example 5 did not add any dopant in step (1), but instead, added a dopant in step (3). During the co-sintering of the precursor and the dopant, it was difficult for the metal cations from the dopant to fully intercalate into the crystal structure, which not only reduced the compaction density and BET specific surface area, but also resulted in an unstable structure, poor electronic conductivity, and a decrease in the average voltage plateau of the phosphate cathode material. Consequently, the discharge specific capacity, initial Coulombic efficiency, rate performance, and cycling performance of the phosphate cathode material are all significantly degraded, indicating that doping the precursor with the dopant is beneficial for the metal cations to more fully intercalate into the crystal structure, improving the compaction density, BET specific surface area, structural stability, electronic conductivity, and average voltage plateau, thereby enhancing the electrochemical performance of the phosphate cathode material.

The main difference among the phosphate cathode materials in Examples 1 to 5 and Examples 21 to 22 lies in the doping amounts of elements Fe and Ti. As shown in Tables 1 and 2, when 0.05≤x≤0.2 and 0.05≤y≤0.2, the resulting phosphate cathode materials exhibit lower powder resistivity and higher average voltage plateau.

The main difference among the phosphate cathode materials in Example 1, and Examples 6 to 8 lies in the types of elements A and B. Compared to Example 1, the phosphate cathode materials in Examples 6 to 8 have decreased compaction density, increased powder resistivity, and lowered average voltage plateau, and more or less decrease in capacity, initial Coulombic efficiency, rate performance, and cycling performance, indicating that the combination of elements Fe and Ti for co-doping provides superior performance in terms of compaction density, BET specific surface area, and electrochemical performance compared to other combinations such as Fe+Mn, Mn+Al, and Ti+Mg.

The main difference among Example 1 and Examples 12 and 13 is the amount of oxalic acid used in step (1). As compared to that in Example 1, the amount of oxalic acid used in Example 12 was reduced, resulting in lower carbon content and a thinner carbon layer, while the amount of oxalic acid used in Example 13 was increased, leading to higher carbon content and a thicker carbon layer. As a result, the compaction density, BET specific surface area, and electrochemical performance of the phosphate cathode materials in both Examples 12 and 13 decrease, indicating that adding an appropriate amount of oxalic acid during the preparation of the phosphate cathode material can precisely control the carbon content and carbon layer thickness of the phosphate cathode material, thus improving the compaction density, BET specific surface area, and overall electrochemical performance of the phosphate cathode material. In comparison with Example 1, Comparative Example 2, without oxalic acid, and Comparative Example 3, where oxalic acid was replaced with an equal molar amount of citric acid, show significant deterioration in compaction density, BET specific surface area, and electrochemical performance, demonstrating that oxalic acid not only has reducing effect but also controls the carbon content and surface morphology of the phosphate cathode material, thereby improving the overall performance of the phosphate cathode material.

Compared with Example 1, Comparative Example 4 did not undergo the first sintering treatment, resulting in a lower crystallinity of the precursor. Consequently, the purity of the phosphate cathode material decreases, leading to a significant reduction in carbon content, carbon layer thickness, compaction density, BET specific surface area, and electrochemical performance.

The main difference among the phosphate cathode materials in Example 1 and Examples 15 to 16 lies in the amount of carbon source used in step (3). As shown in Tables 1 and 2, when the ratio of amount of substance of the phosphorus element in the precursor to the carbon element in the carbon source, i.e., glucose, is 1:0.6, the resulting phosphate cathode materials exhibit higher compaction density, lower powder resistivity, and higher average voltage plateau. The main difference among the phosphate cathode materials in Example 1 and Examples 17 to 18 lies in the type of carbon source used in step (3). As shown in Tables 1 and 2, using glucose as the carbon source is more beneficial than using PEG-2000 or ascorbic acid for forming phosphate cathode materials with higher compaction density, lower powder resistivity, and higher average voltage plateau.

Compared to Examples 25 to 26, Example 1 and Examples 23 to 24 exhibit higher compaction density, suggesting that controlling the ratio of amount of substance of the phosphorus element in the precursor, the sodium element in the sodium source, and the fluorine element in the fluorine source within the range of 1:(1.3 to 1.5):(1.3 to 1.5) is more favorable for enhancing the compaction density of the phosphate cathode materials and achieving better electrochemical performance.

In summary, the present application demonstrates that doping the phosphate cathode materials with specific types and ratios of element A and/or element B, adjusting the amount of oxalic acid, and controlling the types and amounts of the vanadium source, phosphorus source, sodium source, fluorine source, and carbon source can significantly improve the electronic conductivity and structural stability of the phosphate cathode materials, thereby significantly improving the compaction density and BET specific surface area of the phosphate cathode materials, resulting in superior performance in terms of charge and discharge capacities, initial Coulombic efficiency, rate performance, and cycling performance, which is advantageous for the preparation of high-energy-density sodium-ion batteries.

It should be noted that the scope of the present application is not limited by the above implementations. The above implementations are only examples, and within the scopes of the technical solutions of the present application, any implementations having the compositions with substantially the same technical conceptions and achieving the same effects all fall within the technical scope of the present application. Furthermore, without departing from the main conception of the present application, various modifications that a person skilled in the art may conceive upon the implementations, as well as other embodiments constructed by combining part of composing elements of the implementations, are also included within the scope of the present application.

## Claims

1. A phosphate cathode material, comprising a core and a carbon layer coating the core,
wherein the core is represented by formula Na₃V_{2-x-y}AₓB_{y}(PO₄)₂F₃, where 0≤x≤0.5, 0≤y≤0.5, and x and y are not simultaneously zero;
element A and element B each independently comprises one or more of Fe, Mn, Ti, Al, and Mg, and element A and element B are different from each other;
a compaction density of the phosphate cathode material is greater than or equal to 2.0 g/cm³, and a BET specific surface area of the phosphate cathode material is greater than or equal to 8 m²/g.

2. The phosphate cathode material according to claim 1, satisfying one or more of following conditions:
(1) a mass fraction of the carbon layer in the phosphate cathode material is in a range from 1.8% to 3%;
(2) a thickness of the carbon layer is in a range from 0.8 nm to 1.8 nm.

3. The phosphate cathode material according to claim 1, satisfying one or more of following conditions:
(1) an initial charge specific capacity of the phosphate cathode material at 0.1 C is greater than or equal to 120 mAh/g;
(2) an initial discharge specific capacity of the phosphate cathode material at 0.1 C is greater than or equal to 110 mAh/g;
(3) an initial Coulombic efficiency of the phosphate cathode material at 0.1 C is greater than or equal to 90%.

4. A method for preparing a phosphate cathode material, comprising following steps:
mixing a vanadium source, oxalic acid, a phosphorus source, a dopant, and a solvent, and reacting to obtain a mixed solution;
subjecting the mixed solution to a first drying treatment and a first sintering treatment to obtain a precursor;
mixing the precursor, a sodium source, a fluorine source, and a carbon source, and grinding to obtain a slurry;
subjecting the slurry to a second drying treatment and a second sintering treatment to obtain the phosphate cathode material;
wherein the dopant comprises a first source and/or a second source, a first metal element in the first source and a second metal element in the second source each independently comprise one or more of Fe, Mn, Ti, Al, and Mg, and the first metal element and the second metal element are different from each other.

5. The method according to claim 4, wherein mixing the vanadium source, the oxalic acid, the phosphorus source, the dopant, and the solvent, and reacting to obtain the mixed solution comprises:
mixing the vanadium source and the solvent, and holding at a first temperature for a first time period to obtain a first solution;
mixing the first solution, the dopant, and the oxalic acid, and holding at a second temperature for a second time period to obtain a second solution;
mixing the second solution and the phosphorus source, and holding at a third temperature for a third time period to obtain the mixed solution;
wherein the first temperature is in a range from 80 °C to 90 °C, and the first time period is in a range from 30 min to 90 min;
the second temperature is in a range from 90 °C to 95 °C, and the second time period is in a range from 30 min to 60 min;
the third temperature is in a range from 90 °C to 100 °C, and the third time period is in a range from 12 min to 36 min.

6. The method according to claim 5, satisfying one or more of following conditions:
(1) when the dopant comprises the first source and the second source, a ratio of amount of substance of vanadium element in the vanadium source, the oxalic acid, phosphorus element in the phosphorus source, the first metal element in the first source, and the second metal element in the second source is (0.9 to 1.1):(2.5 to 3.5):1:(0 to 0.25):(0 to 0.25);
(2) the vanadium source comprises one or more of vanadium pentoxide, vanadium trioxide, vanadium dioxide, ammonium metavanadate, sodium metavanadate, sodium orthovanadate, and vanadyl oxalate;
(3) the phosphorus source comprises one or more of phosphoric acid, diammonium hydrogen phosphate, ammonium dihydrogen phosphate, ammonium phosphate, disodium hydrogen phosphate, sodium dihydrogen phosphate, and sodium phosphate;
(4) the first source comprises one or more of oxides, hydroxides, and salts containing the first metal element;
(5) the second source comprises one or more of oxides, hydroxides, and salts containing the second metal element.

7. The method according to any one of claims 4 to 6, satisfying one or more of following conditions:
(1) a ratio of amount of substance of phosphorus element in the precursor, sodium element in the sodium source, fluorine element in the fluorine source, and carbon element in the carbon source is 1:(1.3 to 1.5):(1.3 to 1.5):(0.48 to 0.9);
(2) the sodium source comprises one or more of sodium fluoride, sodium hydroxide, sodium carbonate, sodium bicarbonate, sodium nitrate, sodium acetate, sodium oxalate, sodium acetate, sodium dihydrogen phosphate, disodium hydrogen phosphate, and sodium phosphate;
(3) the fluorine source comprises one or more of sodium fluoride, ammonium fluoride, and hydrogen fluoride;
(4) the carbon source comprises one or more of glucose, polyethylene glycol, sucrose, and ascorbic acid.

8. The method according to any one of claims 4 to 6, satisfying one or more of following conditions:
(1) the first sintering treatment is performed at a sintering temperature in a range from 700 °C to 750 °C for a temperature holding period in a range from 1 hour to 3 hours;
(2) the second sintering treatment is performed at a sintering temperature in a range from 550 °C to 750 °C for a temperature holding period in a range from 8 hours to 12 hours.

9. A cathode plate, comprising the phosphate cathode material according to any one of claims 1 to 3 or the phosphate cathode material prepared by the method according to any one of claims 4 to 8.

10. A secondary battery, comprising the cathode plate according to claim 9.
